(19) Europäisches Patentamt
European Patent Office
Office européen des brevets

(11) **EP 4 674 743 A1**

(12) **EUROPEAN PATENT APPLICATION**

(43) Date of publication:
**07.01.2026 Bulletin 2026/02**

(21) Application number: **25181323.4**

(22) Date of filing: **06.06.2025**

(51) International Patent Classification (IPC):
**B62K 25/28** (2006.01)

(52) Cooperative Patent Classification (CPC):
**B62K 25/283**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.07.2024 JP 2024107492**
**03.10.2024 JP 2024174356**

(71) Applicant: **Yamaha Hatsudoki Kabushiki Kaisha**
**Iwata-shi, Shizuoka 438-8501 (JP)**

(72) Inventor: **Hasegawa, Michiharu**
**Iwata-shi, Shizuoka, 4388501 (JP)**

(74) Representative: **Grünecker Patent- und**
**Rechtsanwälte**
**PartG mbB**
**Leopoldstraße 4**
**80802 München (DE)**

(54) **STRADDLED VEHICLE**

(57) A straddled vehicle (1) includes a vehicle body frame (2), a pivot shaft (P), and a rear arm (9). The pivot shaft (P) is supported by the vehicle body frame (2). The rear arm (9) is connected to the vehicle body frame (2) via the pivot shaft (P). The rear arm (9) rotates around the pivot shaft (P) relative to the vehicle body frame (2). The rear arm (9) supports a rear wheel (11) via a rear axle (R). The rear arm (9) includes at least a first arm (9A), a rotary shaft (M), and a second arm (9B). The first arm (9A) is connected to the vehicle body frame (2). The first arm (9A) rotates around the pivot shaft (P) relative to the vehicle body frame (2). The rotary shaft (M) is provided at a rear end portion of the first arm (9A). The second arm (9B) is connected to the first arm (9A) via the rotary shaft (M). The second arm (9B) rotates around the rotary shaft (M) relative to the first arm (9A). The second arm (9B) supports the rear wheel (11) via the rear axle (R).

FIG. 2

## Description

The present invention relates to a straddled vehicle.

A straddled vehicle disclosed in JP 2001-63672 A includes a rear arm. The rear arm is connected to a vehicle body frame via a pivot shaft. The rear arm rotates around the pivot shaft relative to the vehicle body frame, and supports a rear wheel via a rear axle.

In the straddled vehicle in JP 2001-63672 A, a force that rotates the rear arm around the pivot shaft acts on the rear wheel, which is a drive wheel, during throttle operation, for example, during acceleration, deceleration, or turning.

There remains improvement in terms of adjusting a gripping force of the rear wheel in the straddled vehicle.

It is the object of the present invention to provide a straddled vehicle, wherein the gripping force of the rear wheel is adjustable. According to the present invention said object is solved by a straddled vehicle having the features of independent claim 1. Preferred embodiments are laid down in the dependent claims.

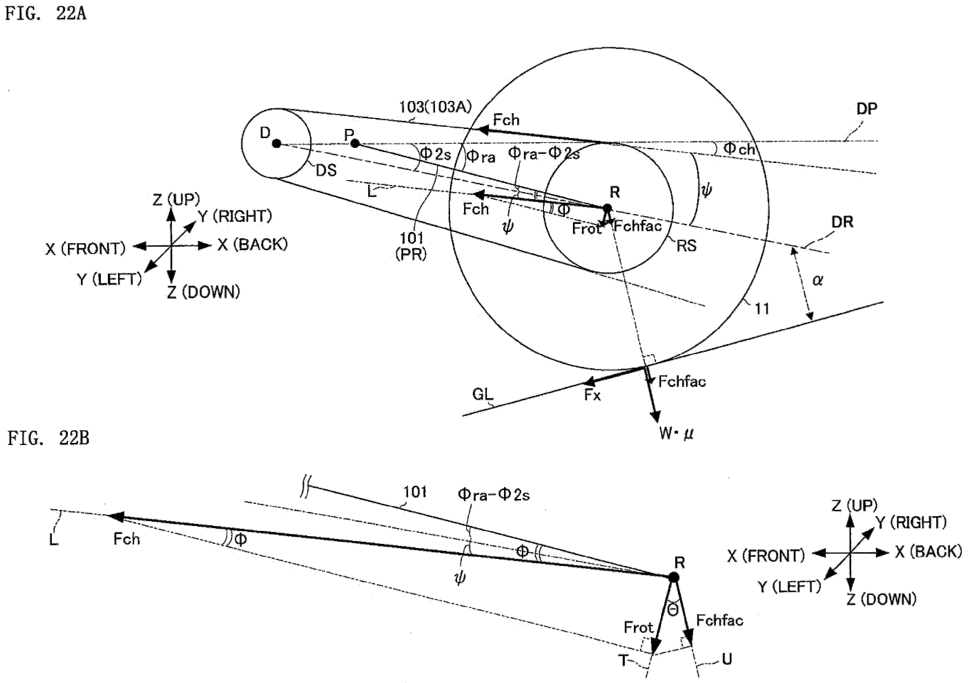

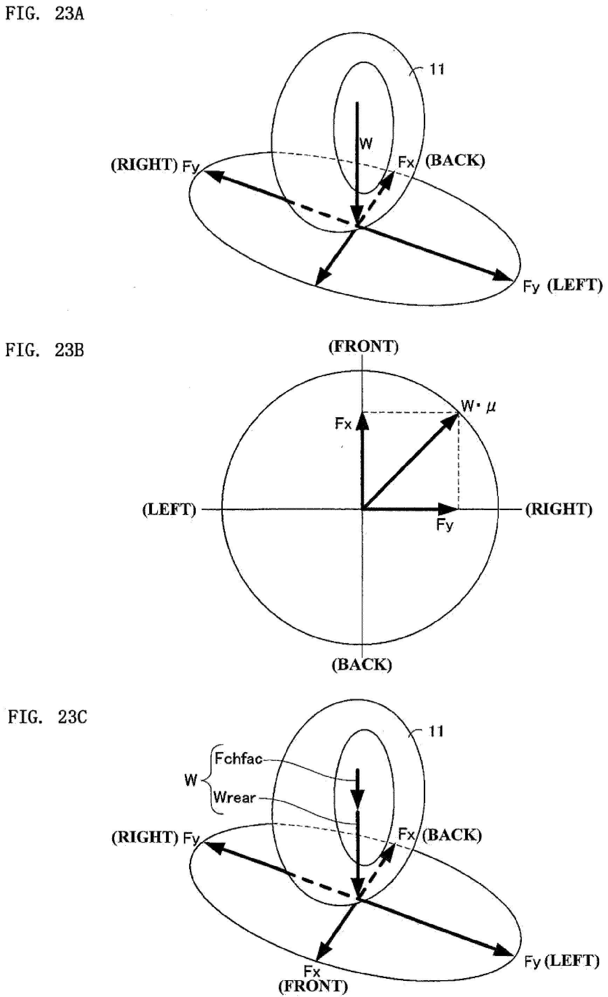

The gripping force of the rear wheel is to be explained with reference to FIGS. 22A, 22B, 23A, 23B and 23C. FIG. 22A is a principle diagram showing operation of a currently-used rear arm. FIG. 22B is a partially enlarged view of FIG. 22A. FIGS. 23A and 23B are each a principle diagram showing a friction circle of a tire. FIG. 23C is a view for detailed explanation of FIG. 23A.

Reference is made to FIGS. 23A to 23C. A gripping force of the rear wheel 11 is represented by tire friction circles shown in FIGS. 23A and 23B. The friction circle of the tire is defined by a static friction force of the rear wheel 11. The static friction force of the rear wheel 11 is an extreme friction force at which the rear wheel 11 does not slip. The static friction force of the rear wheel 11 is the product of a load W applied to the rear wheel 11 perpendicular to a road surface (hereafter, rear wheel vertical load W) and a friction coefficient $\mu$ between the road surface and the tire. That is, the gripping force of the rear wheel 11 falls within the static friction force, for example.

The friction circle of the tire is represented by composition of Fx and Fy, as shown in the following Formula (1). Here, Fx is a forward driving force or a rearward braking force. Fy is a rightward or leftward turning force. W·$\mu$ is a static friction force of the rear wheel 11. If the driving force and the turning force of the rear wheel 11 fall within the static friction force of the rear wheel 11, the rear wheel does not slip.

$$Fx^2 + Fy^2 \leq (W \cdot \mu)^2 \qquad (1)$$

First, in order to improve the gripping force of the rear wheel 11, it has been studied to increase a coefficient of friction between the road surface and the rear wheel 11. However, the coefficient of friction between the road surface and the rear wheel 11 is affected by specifications of the rear wheel 11 or road surface conditions. Accordingly, it is not easy to increase these.

The rear wheel vertical load W contains loads of the straddled vehicle and a driver applied on the rear wheel 11. However, it is undesirable to increase the loads of the straddled vehicle and the driver.

Here, the rear wheel vertical load W contains the force that pushes the rear wheel 11 against the road surface by a chain tension during throttle operation, as shown in FIGS. 22A and 23C mentioned later. Hereunder, the force that pushes the rear wheel 11 against the road surface by the chain tension during the throttle operation is also called a chain force factor. Also in the following, the chain force factor is denoted as Fchfac. That is, the rear wheel vertical load W generated during the throttle operation consists of a weight factor Wrear applied to the rear wheel with or without throttle operation and the chain force factor Fchfac. The weight factor Wrear is the loads of the straddled vehicle and the driver. Therefore, the Formula (1) can be rewritten as follows:

$$Fx^2 + Fy^2 \leq ((Wrear + Fchfac) \cdot \mu)^2 \qquad (2)$$

In the straddled vehicle, an angle of the rear arm constantly changes in response to the throttle operation. Accordingly, the chain force factor Fchfac constantly varies as the rear arm angle changes. That is, the chain force factor Fchfac is not constant because it is affected by the throttle operation. The following describes the chain force factor Fchfac in more detail.

Detailed description is given to a mechanism that generates the chain force factor Fchfac with reference to FIG. 22A. First, a control mechanism of a rear arm 101 is to be explained schematically. A point D denotes a drive shaft. A point P denotes a pivot shaft. A point R denotes a rear axle. A line segment connecting the point P and the point R is referred to as a rear arm axis PR. Numeral DS denotes a drive sprocket. Numeral RS denotes a rear sprocket. A chain 103 is wound around the drive sprocket DS and the rear sprocket RS. Numeral GL denotes a road surface on which the straddled vehicle 1 drives.

The following describes a chain force Fch and a rotational directional component force Frot, which are necessary to explain the chain force factor Fchfac. When the throttle is opened, the chain force Fch is generated on an upper portion 103A of the chain 103. The chain force Fch also acts from a rear axle R in a direction parallel to the upper portion 103A of the chain 103. The chain force Fch acting on the rear axle R is divided into a component force along the rear arm axis PR and a component force along a direction perpendicular to the rear arm axis PR. The component force along the rear arm axis PR is a force that pushes the vehicle body frame forward. The illustration of the component force along the rear arm axis PR is omitted. The component force along the direction perpendicular to the rear arm axis PR is a force that rotates the rear arm 101. Hereunder, the component force along the direction perpendicular to the rear arm axis PR is referred to as a rotational directional component force Frot.

The following describes the rotational directional component force Frot in more detail.

The rotational directional component force Frot is expressed by the chain force Fch and a rotational directional component force angle $\Phi$, as in the following Equation (3).

$$\text{Frot} = \text{Fch} \cdot \sin\Phi = \text{Fch} \cdot \sin(\Phi\text{ra} - \Phi\text{2s} + \psi) \qquad (3)$$

The rotational directional component force angle $\Phi$ defines a gradient of the rotational directional component force Frot relative to the chain force Fch. The chain force Fch acts on the rear axle R. The rotational directional component force angle $\Phi$ is an angle between the rear arm axis PR and a chain virtual line L. The chain virtual line L is a straight line passing through the rear axle R and parallel to the upper portion 103A of the chain 103.

Here, the rotational directional component force angle $\Phi$ is expressed by a rear arm angle $\Phi$ra, an angle $\Phi$2s, and an angle $\psi$. The rear arm angle $\Phi$ra is an angle between a drive pivot axis DP and the rear arm axis PR. The drive pivot axis DP is a virtual line connecting the drive shaft D and the pivot shaft R. The rear arm angle $\Phi$ra is a gradient of the rear arm axis PR relative to the drive pivot axis DP. The angle $\Phi$2s is an angle between the drive pivot axis DP and a drive rear axis DR. The drive rear axis DR is a virtual line connecting the drive shaft D and the rear axle R. "$\Phi$ra-$\Phi$2s" is an angle between the rear arm axis PR and the drive rear axis DR. The angle $\Psi$ is an angle between the drive rear axis DR and the chain virtual line L. Variation in "-$\Phi$2s + $\Psi$" is smaller than that of the rear arm angle $\Phi$ra. Therefore, in the above Equation (3), the rotational directional component force angle $\Phi$ changes substantially as the rear arm angle $\Phi$ra changes. If either the chain force Fch or the rotational directional component force angle $\Phi$ changes, the rotational directional component force Frot will change. If the chain force Fch is made constant, the rotational directional component force Frot changes as the rear arm angle $\Phi$ra changes. That is, the rotational directional component force Frot increases as the rear arm angle $\Phi$ra increases. The rotational directional component force Frot decreases as the rear arm angle $\Phi$ra decreases.

The following describes a relationship between the rotational directional component force Frot and the chain force factor Fchfac. The rotational directional component force Frot is closely related to the chain force factor Fchfac. That is, the chain force factor Fchfac corresponds to a component force of the rotational directional component force Frot along a direction perpendicular to the road surface GL. In other words, the chain force factor Fchfac is sensitive to variations in the rotational directional component force Frot. The chain force factor Fchfac is sensitive to variations in the rear arm angle $\Phi$ra.

The chain force factor Fchfac and the rotational directional component force Frot have the following relationship. That is, as shown in the following Equation (4), the chain force factor Fchfac is expressed by the rotational directional component force Frot and a component force-to-ground perpendicular angle $\Theta$, which is to be mentioned later.

$$\text{Fchfac} = \text{Frot} \cdot \cos\Theta \qquad (4)$$

Description will be given of the component force-to-ground perpendicular angle $\Theta$ with reference to FIG. 22B. The component force-to-ground perpendicular angle $\Theta$ is an angle between a virtual line T of the rotational directional component force and a road surface perpendicular line U. The virtual line T of the rotational directional component force is a virtual line along the rotational directional component force Frot. The road surface perpendicular line U is a virtual line passing through the rear axle R and perpendicular to the road surface GL. The road surface perpendicular line U is along a direction where the chain force factor Fchfac acts.

As above, the chain force factor Fchfac is sensitive to variations in the rotational directional component force Frot and the component force-to-ground perpendicular angle $\Theta$. That is, if the rotational directional component force Frot and the component force-to-ground perpendicular angle $\Theta$ change, the chain force factor Fchfac will change. The rotational directional component force Frot changes as the rear arm angle $\Phi$ra changes. The component force-to-ground perpendicular angle $\Theta$ changes as an angle of the virtual line T of the rotational directional component force, i.e., the rear arm angle $\Phi$ra, changes. Accordingly, the chain force factor Fchfac changes as the rear arm angle $\Phi$ra changes.

Therefore, the gripping force of the rear wheel can be adjusted if the rotational directional component force Frot and the chain force factor Fchfac can be controlled.

The teaching of the present invention provides a straddled vehicle, including

a rear arm connected to a vehicle body frame via a pivot shaft supported by the vehicle body frame, and configured to rotate around the pivot shaft relative to the vehicle body frame and support the rear wheel via a rear axle,
the rear arm including at least
a first arm connected to the vehicle body frame and configured to rotate around the pivot shaft relative to the vehicle body frame,
a rotary shaft provided at a rear end portion of the first arm, and
a second arm connected to the first arm via the rotary shaft, and configured to rotate around the rotary shaft relative to the first arm and support the rear wheel via the rear axle,
the straddled vehicle further including
an actuator configured to generate power to rotate the second arm around the rotary shaft relative to the first arm, and
a power control device configured to control the actuator.

The straddled vehicle includes the vehicle body frame, the pivot shaft, and the rear arm. The pivot shaft is supported by the vehicle body frame. The rear arm is connected to the vehicle body frame via the pivot shaft. The rear arm rotates around the pivot shaft relative to the vehicle body frame. The rear arm supports a rear wheel via the rear axle. The rear arm includes at least the first arm, the rotary shaft, and the second arm. The first arm is connected to the vehicle body frame. The first arm rotates around the pivot shaft relative to the vehicle body frame. The rotary shaft is provided at the rear end portion of the first arm. The second arm is connected to the first arm via the rotary shaft. The second arm rotates around the rotary shaft relative to the first arm. The second arm supports the rear wheel via the rear axle.

That is, the rear arm is bendable around the rotary shaft. The straddled vehicle includes the actuator and the power control device. The actuator generates power to rotate the second arm around the rotary shaft relative to the first arm. The power control device controls the actuator. Thereby, a bending angle of the rear arm is controlled. By controlling the bending angle, the chain force factor is controlled. In other words, a rear wheel vertical load is controlled. Therefore, the straddled vehicle can adjust a gripping force of the rear wheel.

In the straddled vehicle described above, the power control device controls the actuator when the first arm rotates in a first direction around the pivot shaft so that the second arm rotates in a second direction, opposite to the first direction, around the rotary shaft. In other words, the power control device is configured to determine rotation of the first arm and when determined that the first arm rotates in a first direction around the pivot shaft the power control device is configured to control the actuator so that the second arm rotates in a second direction, opposite to the first direction, around the rotary shaft.

In the rear arm according to the present teaching, when the first arm rotates in the first direction around the pivot shaft, the second arm rotates in the second direction, opposite to the first direction, around the rotary shaft. Therefore, a range of change in a rotational directional component force in the present teaching is relatively small. The relatively small range includes a range of change close to zero. A range of change in the chain force factor of the present teaching is also relatively small. The relatively small range includes a range of change close to zero. Therefore, when the first arm rotates around the pivot shaft, the range of change in the rear wheel vertical load is small. This can make a relatively small range of change in the gripping force of the rear wheel. As a result, the gripping force of the rear wheel can be adjusted.

In the straddled vehicle described above, the power control device controls the actuator when the first arm rotates around the pivot shaft so that an angle to ground is kept substantially constant in side view, the angle to ground being an angle formed between a road surface and a second arm axis connecting the rotary shaft and the rear axle. In other words, the power control device is configured to determine the angle to ground and when determined that the first arm rotates in a first direction around the pivot shaft configured to control the actuator so that an angle to ground is kept substantially constant in side view of the straddled vehicle.

In the rear arm according to the present teaching, when the first arm rotates around the pivot shaft, the actuator is controlled so that the angle to ground is kept substantially constant. The angle to ground is an angle between the road surface and the second arm axis connecting the rotary shaft and the rear axle. That is, the second arm is rotated so that the second arm axis is kept at a substantially constant angle relative to the road surface when the first arm is rotated around the pivot shaft. Both the angle to ground and the component force-to-ground perpendicular angle take a fixed angle relative to the road surface. When the angle to ground is substantially constant, the component force-to-ground perpendicular angle is also substantially constant. From Equation (4) described above, a decreasing range of the chain force factor is substantially constant. A magnitude of the chain force factor depends on a magnitude of the rotational directional component force. Therefore, the gripping force of the rear wheel can be adjusted suitably.

The case where the angle to ground is kept substantially constant includes a case where the angle to ground is almost constant in magnitude. The case where the angle to ground is kept substantially constant also includes a case where the angle to ground increases slightly. However, when the angle to ground increases, the range of change in the component force-to-ground perpendicular angle is small. Accordingly, as in Equation (4) described above, decrease in chain force factor is small. Thus, when the rotational directional component force increases as the first arm angle increases, for example, the chain force factor and the rear wheel vertical load can be made larger than those of the currently-used rear arm.

In the straddled vehicle described above, the power control device controls the actuator when the first arm rotates around the pivot shaft so that the second arm axis is kept substantially parallel to the road surface in side view. In other words, when determined that the first arm rotates around the pivot shaft the power control device is configured to control the actuator so that the second arm axis is kept substantially parallel to the road surface in side view of the straddled vehicle.

In the rear arm according to the present teaching, when the first arm rotates around the pivot shaft, the actuator is controlled so that the second arm axis is kept substantially parallel to the road surface. That is, the second arm is rotated so that the second arm axis is kept substantially parallel to the road surface when the first arm is rotated around the pivot shaft. It is preferable that the first arm is only rotated around the pivot shaft to an extent that the rotational directional component force is substantially constant. Therefore, as shown in Equation (4) above, the chain force factor depends on the rotational directional component force and the component force-to-ground perpendicular angle. If the second arm axis is kept substantially parallel to the road surface, the component force-to-ground perpendicular angle is close to perpendicular relative to the road surface. Accordingly, decrease in chain force factor is small. This allows the rear arm in the present teaching to adjust the gripping force of the rear wheel.

Furthermore, the chain force factor, i.e., a force that pushes the rear wheel against the road surface during the throttle operation, remains almost constant in magnitude and continues to point in a substantially vertical direction. This allows the rear arm in the present teaching to adjust the gripping force of the rear wheel during the throttle operation.

In the straddled vehicle described above, the power control device controls the actuator when the first arm rotates around the pivot shaft so that a chain virtual line-rear arm axis angle is kept at a substantially constant magnitude in side view, the chain virtual line-rear arm axis angle being an angle between a chain virtual line and a rear arm axis, the chain virtual line being a virtual line passing through the rear axle and parallel to the upper portion of the chain, and the rear arm axis being a virtual line connecting the pivot shaft and the rear axle. In other words, when determined that the first arm rotates around the pivot shaft, the power control device is configured to control the actuator so that a chain virtual line-rear arm axis angle is kept at a substantially constant magnitude in side view.

The power control device according to the present teaching controls the actuator so that a chain virtual line-rear arm axis angle is kept at a substantially constant magnitude when the first arm rotates around the pivot shaft. The chain virtual line-rear arm axis angle is the angle between the chain virtual line and the rear arm axis. The chain virtual line is the virtual line passing through the rear axle and parallel to the upper portion of the chain in side view when the first arm rotates around the pivot shaft. The rear arm axis is the virtual line connecting the pivot shaft and the rear axle.

From Equation (3) described above, the rotational directional component force depends on the chain force and the magnitude of the rotational directional component force angle. The rotational directional component force angle corresponds to the chain virtual line-rear arm axis angle in the present teaching. Formally, in the present teaching, the rotational directional component force depends on the chain force and the chain virtual line-rear arm axis angle. However, the chain virtual line-rear arm axis angle is kept substantially constant when the first arm rotates around the pivot shaft. Accordingly, the rotational directional component force depends on the chain force in the present teaching. The chain force is linked to a driver's throttle operation. Therefore, the rear arm of the present teaching allows the driver to adjust the gripping force of the rear wheel.

Furthermore, if the chain force is constant, the magnitude of the rotational directional component force can be controlled to a constant magnitude.

The straddled vehicle described above further includes a power transmission mechanism configured to connect the actuator and the second arm, transmit power of the actuator to the second arm, and rotate the second arm around the rotary shaft relative to the first arm.

The power transmission mechanism of the present teaching connects the actuator and the second arm. The power transmission mechanism transmits the power of the actuator to the second arm. The power transmission mechanism rotates the second arm around the rotary shaft relative to the first arm. The power transmission mechanism can transmit the power of the actuator to the second arm efficiently.

In the straddled vehicle described above, the actuator is connected to the first arm.

Since the actuator can be located in the vicinity of the first arm, an installation space can be made compact.

In the straddled vehicle described above, the actuator and the power transmission mechanism are connected to the first arm.

Since the actuator and the power transmission mechanism can be located in the vicinity of the first arm, an installation space can be made more compact.

The straddled vehicle described above further includes an acquiring unit configured to acquire information, indicating a traveling state of the straddled vehicle, and the power control device controls the actuator in accordance with the information indicating the traveling state.

The gripping force of the rear wheel can be adjusted depending on the traveling state of the straddled vehicle.

In the straddled vehicle described above, the information indicating the traveling state is information pertaining to a stroke of a rear suspension that supports the rear arm so as to swing upward and downward relative to the vehicle body frame, and the power control device controls the actuator in accordance with the information pertaining to the stroke of the rear suspension when the first arm rotates around the pivot shaft. In other words, the power control device is configured to control the actuator in accordance with the information pertaining to the stroke of the rear suspension when determined that the first arm rotates around the pivot shaft.

Variations in information pertaining to the stroke of the rear suspension have a significant impact on adjustment of the gripping force. Therefore, the information pertaining to the stroke of the rear suspension can be used to control the power of the actuator.

In the straddled vehicle described above, the information indicating the traveling state is information indicating acceleration of the straddled vehicle, and the power control device controls the actuator in accordance with the information indicating the acceleration.

The gripping force of the rear wheel can be adjusted upon acceleration of the straddled vehicle.

In the straddled vehicle described above, the information indicating the traveling state is information indicating deceleration of the straddled vehicle, and the power control device controls the actuator in accordance with the information indicating the deceleration.

The gripping force of the rear wheel can be adjusted upon deceleration of the straddled vehicle.

In the straddled vehicle described above, the information indicating the traveling state is information indicating turning of the straddled vehicle, and the power control device controls the actuator in accordance with the information indicating the turning.

The gripping force of the rear wheel can be adjusted upon turning of the straddled vehicle.

In the straddled vehicle described above, the power control device determines whether or not to control the actuator in accordance with the information indicating the traveling state.

The gripping force of the rear wheel can be adjusted when it is determined to control the actuator in accordance with the information indicating the traveling state.

In the straddled vehicle described above, the straddled vehicle includes an operating unit configured to receive driver's operation to control the actuator, and the power control device controls the actuator in accordance with the driver's operation of the operating unit.

The gripping force of the rear wheel can be adjusted when the operating unit is operated by the driver.

BRIEF DESCRIPTION OF DRAWINGS

For the purpose of illustrating the invention, there are shown in the drawings several forms which are presently preferred.

FIG. 1 is a left side view of a straddled vehicle according to an embodiment.

FIG. 2 is a schematic diagram of a drive mechanism and drive control of a rear arm.

FIG. 3A illustrates a control mechanism for a bending angle, and FIG. 3B is a schematic diagram of a control mechanism for a bending angle, which differs from that of FIG. 3A.

FIG. 4 is a flowchart of the drive control of the rear arm.

FIGS. 5A to 5D are each a diagram for explaining operation of the rear arm according to operational example (1).

FIG. 6 is an enlarged view of the rear arm shown in FIG. 5A.

FIG. 7 is an enlarged view of the rear arm shown in FIG. 5B.

FIG. 8A is an enlarged view of the rear arm shown in FIG. 5C, and FIG. 8B is an enlarged view of the rear arm shown in FIG. 5D.

FIGS. 9A to 9D are diagrams for explaining operation of a currently-used rear arm.

FIG. 10A is an enlarged view of the rear arm shown in FIG. 9A, and FIG. 10B is an enlarged view of the rear arm shown in FIG. 9B.

FIG. 11A is an enlarged view of the rear arm shown in FIG. 9C, and FIG. 11B is an enlarged view of the rear arm shown in FIG. 9D.

FIG. 12A is a table showing values of respective elements of the rear arm according to the operational example (1), FIG. 12B is a table showing values of respective elements of the currently-used rear arm, and FIG. 12C is a table showing values of respective elements of a rear arm according to an operational example (2).

FIG. 13A is a table showing ranges of changes in the respective elements of the rear arm according to the operational example (1), FIG. 13B is a table showing ranges of changes in the respective elements of the currently-used rear arm, and FIG. 13C is a table showing ranges of changes in the respective elements of the rear arm according to the operational example (2).

FIG. 14A is a graph showing a relationship between a stroke amount of a rear suspension and an angle of the rear arm according to the operational example (1), and FIG. 14B is a graph showing a relationship between a rear stroke and an angle of a main arm according to the operational example (1).

FIG. 15A is a graph showing a relationship between the stroke amount of the rear suspension and a rotational directional component force angle according to the operational example (1), and FIG. 15B is a graph showing a relationship between the rear stroke and the rotational directional component force according to the operational examples (1) and (2).

FIGS. 16A to 16D are each a diagram for explaining operation of the rear arm according to the operational example (2).

FIG. 17A is an enlarged view of the rear arm shown in FIG. 16A, and FIG. 17B is an enlarged view of the rear arm shown in FIG. 16B.

FIG. 18A is an enlarged view of the rear arm shown in FIG. 16C, and FIG. 18B is an enlarged view of the rear arm shown in FIG. 16D.

FIG. 19 is a graph showing a relationship between a stroke amount of a rear suspension and a rotational directional component force angle according to one modified embodiment.

FIG. 20 is a diagram for explaining a way to determine a rotational directional component force, which differs from that of the embodiment.

FIG. 21 is a schematic view illustrating a straddled vehicle of one modified embodiment.

FIG. 22A is a principle diagram showing operation of a currently-used rear arm, and FIG. 22B is an enlarged view around a rotational directional component force in FIG. 22A.

FIGS. 23A to 23C are each a principle diagram for explaining a gripping force of a rear wheel.

DETAILED DESCRIPTION

A straddled vehicle 1 according to the present teaching will be described hereinafter with reference to the drawings.

1. Outline Configuration of Straddled Vehicle 1

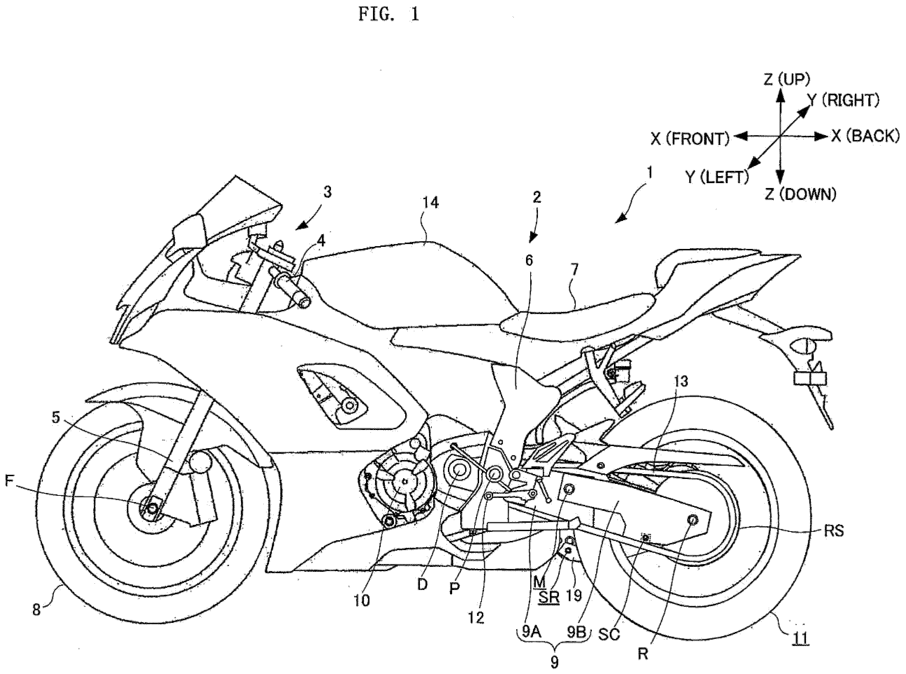

FIG. 1 is a left side view of a straddled vehicle 1 according to an embodiment. Description is made of an outline construction of the straddled vehicle 1.

FIG. 1 shows a longitudinal direction X, a transverse direction Y, and an up-down direction Z of the straddled vehicle 1. The longitudinal direction X, transverse direction Y, and up-down direction Z are defined with reference to a driver (also called a rider) riding on the straddled vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver riding on the straddled vehicle 1. Unless otherwise stated in this specification, "forward" and "rearward" include not only directions parallel to the longitudinal direction X but also directions approximate to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise stated, "upward" and "downward" include not only directions parallel to the up-down direction Z but also directions approximate to the up-down direction Z. The terms "parallel" or "horizontal" include not only parallel or horizontal but also nearly parallel or nearly horizontal. The term "substantially parallel" is used to indicate "nearly parallel". The term "substantially horizontal" is used to indicate "nearly parallel". For reference, the drawings show the terms FRONT, REAR, UP, DOWN, RIGHT, and LEFT, as appropriate.

In the present specification, the language "in side view of the straddled vehicle 1" is referred to as "in side view of the vehicle", as appropriate. The language "in plan view of the straddled vehicle 1" is referred to as "in plan view of the vehicle", as appropriate. The language "in front view of the straddled vehicle 1" is referred to as "in front view of the vehicle", as appropriate.

The straddled vehicle 1 includes a vehicle body frame 2, a steering device 3, a front axle F, and a front wheel 8. The vehicle body frame 2 extends in the longitudinal direction X. The steering device 3 is supported by a front part of the vehicle body frame 2. The steering device 3 is rotatable relative to the vehicle body frame 2.

The steering device 3 includes a handlebar 4, a front suspension 5, and the front axle F. The handlebar 4 is located in an upper part of the steering device 3.

The handlebar 4 includes a throttle grip on a right side. The throttle grip is operated by the driver. An operation on the throttle grip is referred to as a throttle operation. When the rider turns the throttle grip, the straddled vehicle 1 accelerates. When the driver turns the throttle grip back during acceleration of the straddled vehicle 1, the straddled vehicle 1 decelerates by engine braking.

The handlebar 4 includes a front brake lever on a front side of the throttle grip. When the front brake lever is operated during traveling of the straddled vehicle 1, a front brake device is actuated. The front brake device is actuated, whereby the front wheel 8 is braked.

The front suspension 5 extends downward from the handlebar 4. The front axle F is located in a lower part of the steering device 3. The front axle F is supported by the front suspension 5. The driver of the straddled vehicle 1 grips the handlebar 4 and steers the steering device 3.

The front wheel 8 is supported by the steering device 3. Specifically, the front wheel 8 is supported by the front axle F. The front wheel 8 is rotatable around the front axle F.

The vehicle body frame 2 includes a main frame 6. The main frame 6 extends rearward from a front part of the vehicle body frame 2. More specifically, the main frame 6 extends rearward and downward in side view of the vehicle.

The straddled vehicle 1 includes an engine 10. The engine 10 generates power for traveling the straddled vehicle 1. An intake air amount of the engine 10 is adjusted by the above-described throttle operation. At least part of the engine 10 is located below the main frame 6 in side view of the vehicle. The engine 10 is located rearward of the steering device 3 and the front wheel 8 in side view of the vehicle. The engine 10 is supported by the vehicle body frame 2. For example, the engine 10 is supported by the main frame 6. The engine 10 is fixed to the vehicle body frame 2. The engine 10 does not swing relative to the vehicle body frame 2.

The straddled vehicle 1 has a transmission not shown. The transmission is, for example, located rearward of the engine 10. The power generated by the engine 10 is inputted to the transmission. The transmission includes a plurality of gears. The transmission is configured to be switchable to one transmission ratio from among a plurality of transmission ratios. The transmission changes the rotation speed of the power inputted to the transmission with the selected transmission ratio. In the present specification, the transmission ratio is called gear position appropriately.

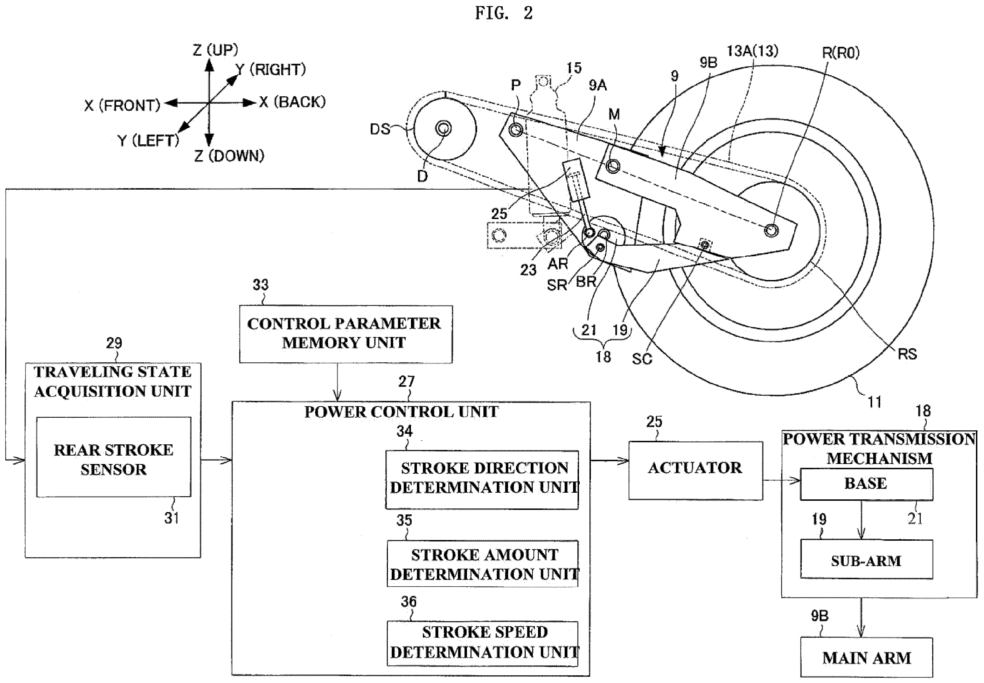

The transmission includes a drive shaft D configured to output power generated by the engine 10. The transmission transmits power, inputted from the engine 10, through the drive shaft D to a rear wheel 11, which is to be mentioned later, at a selected transmission ratio. A drive sprocket DS (see FIG. 2 mentioned later) is connected to the drive shaft D.

The straddled vehicle 1 includes a shift pedal 12. The shift pedal 12 is provided on a left side face of the vehicle. The shift pedal 12 is operated by a left leg of the driver. The transmission shifts a gear position in response to the operation of the shift pedal 12.

The straddled vehicle 1 includes a brake pedal not shown. The brake pedal is provided on a right side face of the vehicle. The brake pedal is operated by a right leg of the driver. When the brake pedal is operated during traveling of the straddled vehicle 1, a rear brake device not shown is actuated. The rear brake device is actuated, whereby the rear wheel 11 mentioned later is braked.

The straddled vehicle 1 has a fuel tank 14. The fuel tank 14 stores a fuel. The fuel tank 14 is located rearward of the steering device 3 and the front wheel 8 in side view of the vehicle. The fuel tank 14 is located above the engine 10 in side view of the vehicle. At least part of the fuel tank 14 is located above the main frame 6 in side view of the vehicle. At least part of the fuel tank 14 is located at the same height position as the handlebar 4 in side view of the vehicle. The fuel tank 14 is supported by the vehicle body frame 2.

The straddled vehicle 1 includes a seat 7. The seat 7 is located rearward of the fuel tank 14. At least part of the seat 7 is located at the same height position as the fuel tank 14 in side view of the vehicle. The seat 7 is located more rearward and higher than the engine 10. The seat 7 is supported by the vehicle body frame 2.

The driver sits down across the seat 7, and puts on a knee grip. The knee grip is a holding of part of the straddled vehicle 1 between the driver's legs. The part of the straddled vehicle 1 is, for example, at least part of the main frame 6 and the fuel tank 14.

The straddled vehicle 1 has a pivot shaft P, a rear arm 9, a rear axle R and the rear wheel 11. The pivot shaft P is located rearward of the engine 10. The pivot shaft P is located below the fuel tank 14 and the seat 7. The pivot shaft P is located rearward of the drive shaft D. The pivot shaft P is located at a height position substantially the same as the drive shaft D or a height position slightly higher than the drive shaft D. The pivot shaft P is supported by the vehicle body frame 2.

The rear arm 9 is supported by the pivot shaft P. The rear arm 9 extends rearward from the pivot shaft P. The rear arm 9 extends slightly obliquely downward from the pivot shaft P. The rear arm 9 is swingable around the pivot shaft P. The rear arm 9 rotates around the pivot shaft P relative to the vehicle body frame 2.

The rear wheel 11 includes a driven sprocket RS (see FIG. 2 mentioned later). The rear axle R and the driven sprocket RS are supported by a rear part of the rear arm 9. The driven sprocket RS is connected to the rear axle R. The rear arm 9 supports the rear axle 11. The rear arm 9 supports the rear wheel 11 via the rear axle R. The rear wheel 11 is rotatable around the rear axle R. The rear axle 11 is located below the drive shaft D and the pivot shaft P.

The straddled vehicle 1 includes a chain 13. The chain 13 is wound around the drive sprocket DS and the driven sprocket RS. The chain 13 couples the transmission to the rear wheel 11. The chain 13 transmits the power, output from the transmission, to the rear wheel 11. The rear wheel 11 rotates by the power transmitted via the chain 13. As described above, the transmission and the chain 13 transmit the power, generated by the engine 10, to the rear wheel 11.

2. Rear Arm

FIG. 2 is a schematic diagram of a drive mechanism and drive control of the rear arm. FIG. 2 shows in detail a rear arm 9 and its peripheral mechanism shown in FIG. 1.

The pivot shaft P is located slightly above a virtual line connecting the drive shaft D and the rear axle R. Thereby, virtual lines connecting the pivot shaft P, the drive shaft D, and the rear axle R form a triangle. Here in FIG. 2, the virtual lines are omitted.

The rear arm 9 includes at least a first arm 9A and a main arm 9B. The first arm 9A is a front portion of the rear arm 9. The main arm 9B is a rear portion of the rear arm 9. Here, the first arm 9A corresponds to the first arm in the present teaching.

The first arm 9A includes the pivot shaft P at its front end portion. The first arm 9A is connected to the vehicle body frame 2 via the pivot shaft P. That is, the vehicle body frame 2 supports the pivot shaft P. The pivot shaft P supports the first arm 9A. The first arm 9A rotates around the pivot shaft P relative to the vehicle body frame 2.

The first arm 9A supports a rotary shaft M. The rotary shaft M supports the main arm 9B. The rotary shaft M is provided at a rear end portion of the first arm 9A. In other words, the rotary shaft M is provided at a front end portion of the main arm 9B. The main arm 9B rotates around the rotary shaft M relative to the first arm 9A. Here, the rotary shaft M corresponds to the rotary shaft in the present teaching. The main arm 9B corresponds to the second arm in the present teaching.

The main arm 9B supports a rear axle R at its rear end portion. The rear axle R supports the rear wheel 11. The main arm 9B supports the rear wheel 11 via the rear axle R.

Thereby, the rear arm 9 is bendable around the rotary shaft M. A rotation axis of the pivot shaft P is parallel with a rotation axis of rotary shaft M and parallel with a rotation axis of the rear axle R.

3. Actuator and Power Control Unit

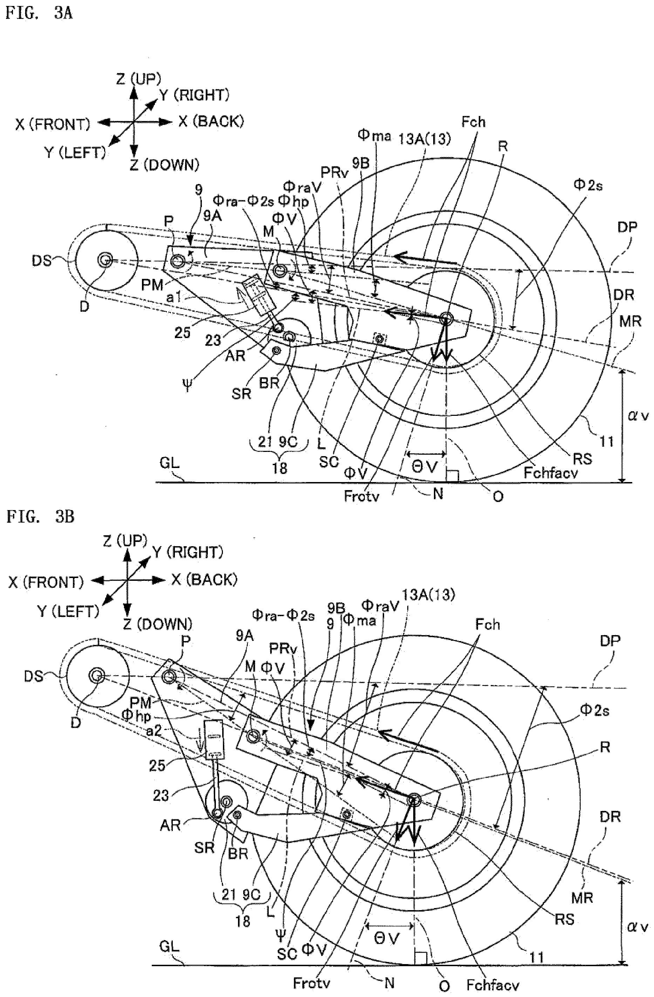

A mechanism for controlling a bending angle $\Phi$ma of the rear arm 9 is to be described with reference to FIGS. 2, 3A, and 3B.

FIG. 3A illustrates a control mechanism for the bending angle $\Phi$ma. FIG. 3B illustrates a control mechanism for the bending angle $\Phi$ma, which differs from that of FIG. 3A.

As shown in FIG. 2, the straddled vehicle 1 includes an actuator 25, a power transmission mechanism 18, and a power control unit 27. Here, the power control unit 27 corresponds to the power control device in the present teaching.

The actuator 25 generates power for rotating the main arm 9B. With the power, the main arm 9B rotates around the rotary shaft M relative to the first arm 9A. In the following, the actuator 25 is, for example, a hydraulic cylinder. The actuator 25 may be another type of cylinder such as an air cylinder.

The actuator 25 is connected to the first arm 9A. The actuator 25 is located in the vicinity of the first arm 9A. This can make a compact installation space of the actuator 25.

The actuator 25 and the power transmission mechanism 18 are connected to the first arm 9A. The actuator 25 and the power transmission mechanism 18 can be located in the vicinity of the first arm 9A. This can make a compact installation space of the actuator 25 and the power transmission mechanism 18.

The power control unit 27 controls the actuator 25. Specifically, the power control unit 27 controls a driving speed, a driving amount, and a driving direction of the actuator 25.

The power control unit 27 controls the actuator 25 that extends and contracts a rod 23. Thereby, as shown in FIGS. 3A and 3B, the power control unit 27 controls the bending angle $\Phi$ma of the rear arm 9. Extending the rod 23 means that the rod 23 is pushed out by the actuator 25. Contracting the rod 23 means that the rod 23 is pulled in by the actuator 25. The bending angle $\Phi$ma is an angle formed by a first arm axis PM and a main arm axis MR. The first arm axis PM is a virtual line connecting the pivot shaft P and the rotary shaft M. The main arm axis MR is a virtual line connecting the rotary shaft M and the rear axle R. The bending angle $\Phi$ma represents a degree of bending of the rear arm 9. Here, the main arm axis MR corresponds to the second arm axis in the present teaching.

FIG. 3A shows a state in which the rod 23 is driven in a contracting direction a1. When the actuator 25 is driven in the contracting direction a1 by a predetermined driving amount, the rear arm 9 is controlled to be the bending angle $\Phi$ma, corresponding to the driving amount, via the power transmission mechanism 18.

FIG. 3B shows a state in which the rod 23 is driven in an extending direction a2. When the actuator 25 is driven in the extending direction a2 by a predetermined driving amount, the rear arm 9 is controlled to be the bending angle $\Phi$ma, corresponding to the driving amount, via the power transmission mechanism 18.

The power control unit 27 adjusts the gripping force of the rear wheel 11 by controlling the bending angle $\Phi$ma of the rear arm 9. That is, the power control unit 27 controls a rotational directional component force FrotV of the rear arm 9 and a chain force factor FchfacV by controlling the bending angle $\Phi$ma of the rear arm 9. The rotational directional component force FrotV is a component force of the chain force Fch. The rotational directional component force FrotV acts along a direction perpendicular to the main arm axis MR. The chain force factor FchfacV is a force that pushes the rear wheel 11 against a road surface GL by the chain force Fch.

Here, the problem that the currently-used straddled vehicle has will be described in more detail. Reference is again made to FIG. 22A.

The driver performs a throttle operation by predicting an acceleration of the straddled vehicle to be reached after the throttle operation. That is, the driver determines a throttle operation amount by predicting the acceleration of the straddled vehicle to be reached. It is assumed that the straddled vehicle reaches a certain acceleration by a certain throttle operation. However, there is a case where a deviation occurs between an actual acceleration and the acceleration predicted in response to the throttle operation. The deviation between the actual acceleration and the acceleration predicted in response to the throttle operation results in a large time loss particularly in race traveling.

In consideration of the present teaching the gripping force (traction) of the rear wheel 11 during the throttle operation deviates from a gripping force predicted by the driver. In general, the gripping force of the rear wheel 11 increases as the rear arm axis PR becomes more horizontal relative to the road surface GL during the throttle operation. However, in the straddled vehicle of a chain driven type, the rear arm 101 rotates around the pivot shaft P in accordance with the throttle operation. Therefore, in the currently-used rear arm 101, a range of change in the gripping force of the rear wheel 11 is increased during the throttle operation. As a result, the rear wheel 11 may not obtain a gripping force required to achieve a target acceleration during the throttle operation. Idling of the rear wheel 11 causes a deviation between the acceleration predicted in response to the throttle operation and the actual acceleration.

A technique of adjusting the gripping force of the rear wheel 11 by controlling the bending angle Φma is taken into consideration. The following describes in detail adjustment of the gripping force while describing the power transmission mechanism 18.

### 4. Power Transmission Mechanism

Reference is again made to FIGS. 2, 3A, and 3B. As shown in FIG. 2, the power transmission mechanism 18 transmits the power of the actuator 25 to the main arm 9B. The power transmission mechanism 18 connects the actuator 25 and the main arm 9B. The power transmission mechanism 18 transmits the power of the actuator 25 to the main arm 9B. The power transmission mechanism 18 rotates the main arm 9B around the rotary shaft M relative to the first arm 9A.

The power transmission mechanism 18 includes a sub-arm 19 and a base 21. The power of the actuator 25 is transmitted to the main arm 9B via the sub-arm 19 and the base 21.

The sub-arm 19 includes a rotary shaft SR at its front end portion. The front end portion of the sub-arm 19 is connected to the base 21 via the rotary shaft SR. The sub-arm 19 includes a rotary shaft SC at its rear end portion. The rear end portion of the sub-arm 19 is connected to the main arm 9B via the rotary shaft SC.

The base 21 is a discal member and includes a rotary shaft BR at its center portion. The base 21 supports the rotary shaft SR at a position eccentric from the rotary shaft BR. That is, the rotary shaft SR is supported by the sub-arm 19 and the base 21. Accordingly, rotation of the base 21 is transmitted to the sub-arm 19. Moreover, the base 21 supports a rotary shaft AR, mentioned later, at a position away from the rotary shaft SR.

The actuator 25 includes a rod 23. The rod 23 is operated by the power of the actuator 25. The rod 23 supports the rotary shaft AR at its tip end portion. The rotary shaft AR is supported by the base 21 and the rod 23. Accordingly, the power of the actuator 25 is transmitted to the base 21.

As shown in FIG. 3B, when the first arm 9A rotates clockwise around the pivot shaft P in left side view of the straddled vehicle 1, the actuator 25 generates power to extend the rod 23. The actuator 25 generates the power for extending the rod 23, whereby the base 21 rotates counterclockwise. The base 21 rotates counterclockwise, whereby the sub-arm 19 rotates. The sub-arm 19 rotates, whereby the main arm 9B rotates counterclockwise around the rotary shaft M.

As shown in FIG. 3A, when the first arm 9A rotates counterclockwise around the pivot shaft P in left side view of the straddled vehicle 1, the actuator 25 generates power to contract the rod 23. The actuator 25 generates the power for contracting the rod 23, whereby the base 21 rotates clockwise. The base 21 rotates clockwise, whereby the sub-arm 19 rotates. The sub-arm 19 rotates, whereby the main arm 9B rotates clockwise around the rotary shaft M.

### 5. Control of Actuator

As shown in FIG. 2, the straddled vehicle 1 includes a traveling state acquisition unit 29. The traveling state acquisition unit 29 acquires information indicating a traveling state of the straddled vehicle 1. The information indicating the traveling state contains a stroke amount of the rear suspension 15. Here, the traveling state acquisition unit 29 corresponds to the acquiring unit in the present teaching.

The traveling state acquisition unit 29 is, for example, a rear stroke sensor 31. The rear stroke sensor 31 detects a stroke amount of the rear suspension 15 (hereinafter, also referred to as a rear stroke amount). The detected stroke amount is information indicating whether the straddled vehicle 1 accelerates, decelerates, or turns. The power control unit 27 controls the actuator 25 based on the detected stroke amount.

The power control unit 27 controls the actuator 25 in accordance with the stroke amount of the rear suspension 15 when the first arm 9A rotates around the pivot shaft P. Variations in the stroke amount of the rear suspension 15 have a significant impact on the rear wheel vertical load W.

The power control unit 27 controls the actuator 25 by using the stroke amount of the rear suspension 15.

The power control unit 27 continuously controls the actuator 25 during the traveling of the straddled vehicle 1 by using the information indicating the traveling state acquired by the traveling state acquisition unit 29.

The information indicating the traveling state contains information indicating acceleration of the straddled vehicle 1. The power control unit 27 controls the actuator 25 based on the information indicating the acceleration.

The information indicating the acceleration is the stroke amount of the rear suspension 15.

The information indicating the traveling state contains information indicating deceleration of the straddled vehicle 1. The deceleration corresponds to deceleration with the engine brake and deceleration with the rear brake device. The power control unit 27 controls the actuator 25 based on the information indicating the deceleration.

The information indicating the deceleration is the stroke amount of the rear suspension 15.

The information indicating the traveling state contains information indicating a turn of the straddled vehicle 1. The turn is accompanied by small acceleration or deceleration. The power control unit 27 controls the actuator 25 based on the information indicating the turn.

The information indicating the turn is the stroke amount of the rear suspension 15.

The straddled vehicle 1 includes a control parameter memory unit 33. The control parameter memory unit 33 stores a power control table. The power control table stores in advance information indicating the traveling state and information for controlling the actuator 25. The information indicating the traveling state contains a stroke amount of the rear suspension 15, for example. The information for controlling the actuator 25 is a target value for the power control unit 27 to control the actuator 25. The target value is, for example, a stroke direction, a stroke amount, and a stroke speed of the actuator 25.

The control parameter memory unit 33 may be provided in the power control unit 27.

The power control unit 27 refers to the information indicating the traveling state, acquired by the traveling state acquisition unit 29, and the power control table. The power control unit 27 determines the stroke direction, the stroke amount, and the stroke speed of the actuator 25 in accordance with the traveling state acquired by the traveling state acquisition unit 29. The power control unit 27 drives the actuator 25 in accordance with the determined stroke direction, the determined stroke amount, and the determined stroke speed.

The power control unit 27 includes, for example, a stroke direction determination unit 34, a stroke amount determination unit 35, and a stroke speed determination unit 36.

The stroke direction determination unit 34 determines a stroke direction of the actuator 25 corresponding to the stroke direction of the rear suspension 15. The stroke amount determination unit 35 determines a stroke amount of the actuator 25 corresponding to the stroke amount of the rear suspension 15. The stroke speed determination unit 36 determines a stroke speed of the actuator 25 corresponding to the stroke speed of the rear suspension 15.

The power control unit 27 may include only the stroke amount determination unit 35 and the stroke speed determination unit 36. Moreover, the power control unit 27 may include only the stroke amount determination unit 35.

6. Control Flow of Rear Arm

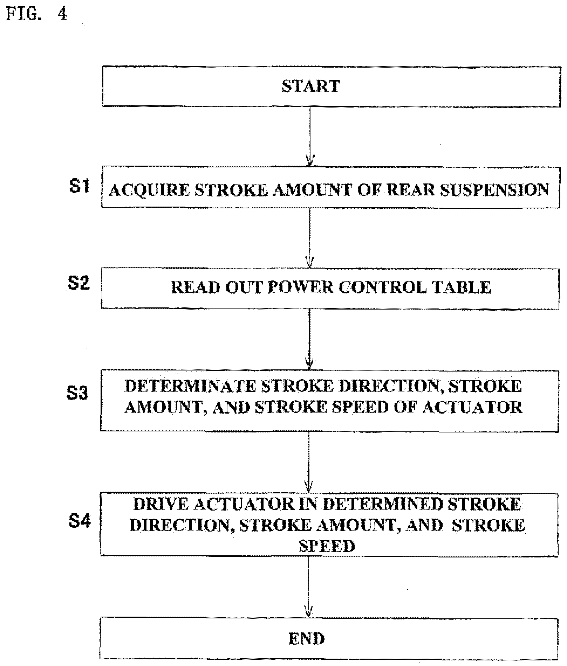

A control flow of the rear arm 9 performed by the power control unit 27 will be described with reference to FIG. 4.

Step S1: Acquisition of Stroke Amount of Rear Suspension 15

When the driver performs throttle operation, the rear suspension 15 is stroked in a mode corresponding to whether the straddled vehicle 1 accelerates, decelerates, or turns. The power control unit 27 acquires the stroke amount of the rear suspension 15 from the traveling state acquisition unit 29.

Step S2: Reading of Power Control Table

The power control unit 27 reads out a power control table from the control parameter memory unit 33. The power control unit 27 reads out the stroke direction, the stroke amount, and the stroke speed of the actuator 25 corresponding to the acquired stroke amount of the rear suspension 15.

Variations in the stroke amount of the rear suspension 15 corresponds to the variations in a first arm angle $\Phi hp$ mentioned later.

The following describes a relationship between the stroke amount of the rear suspension 15 and the stroke direction of the actuator 25, a relationship between the stroke amount of the rear suspension 15 and the stroke amount of the actuator 25, and a relationship between the stroke amount of the rear suspension 15 and the stroke speed of the actuator 25 in the power control table. The variation in the amount of stroke of the rear suspension 15 is monitored by the power control unit 27.

When the straddled vehicle 1 accelerates, the stroke direction of the actuator 25 is a direction where the rod 23 extends. When the straddled vehicle 1 accelerates, the stroke amount of the rear suspension 15 decreases. The decrease in the stroke amount of the rear suspension 15 is associated with the direction where the actuator 25 causes the rod 23 to extend. For example, in the power control table, the direction where the actuator 25 causes the rod 23 to extend is defined as a positive direction. Therefore, in the power control table, the stroke amount of the actuator 25 increases in the positive direction as the stroke amount of the rear suspension 15 decreases.

The stroke amount of the actuator 25 corresponds to the bending angle $\Phi$ma mentioned later.

When the straddled vehicle 1 decelerates, the stroke direction of the actuator 25 is a direction where the rod 23 contracts. When the straddled vehicle 1 decelerates, the stroke amount of the rear suspension 15 increases. The increase in the stroke amount of the rear suspension 15 is associated with the direction where the actuator 25 causes the rod 23 to contract. For example, in the power control table, the direction where the actuator 25 causes the rod 23 to contract is defined as a negative direction. Therefore, in the power control table, the stroke amount of the actuator 25 increases in the negative direction as the stroke amount of the rear suspension 15 increases.

The power control unit 27 calculates a temporal variation in the stroke amount of the rear suspension 15 (a change rate of the stroke of the rear suspension 15). As the change rate of the stroke of the rear suspension 15 increases, the stroke speed of the actuator 25 is set to a higher speed. The power control table stores a relationship between the change rate of the stroke amount of the rear suspension 15 and the stroke speed of the actuator 25.

Step S3: Determination of Stroke Direction, Stroke Amount, and Stroke Speed of Actuator 25

The power control unit 27 determines the stroke direction, the stroke amount, and the stroke speed of the actuator 25 based on the power control table.

Step S4: Driving of Actuator 25 in Determined Stroke Direction, Stroke Amount, and Stroke Speed

The power control unit 27 operates the actuator 25 in the determined stroke direction, the stroke amount, and the stroke speed.

Thereby, the power of the actuator 25 is transmitted to the main arm 9B via the power transmission unit 18. As a result, the bending angle $\Phi$ma is controlled to a target angle.

7. Operational Example (1) of Rear Arm

The following describes an operational example (1) of the rear arm. An outline of the operational example (1) is to be described with reference to FIGS. 3A and 3B. Note that angles shown in FIGS. 3A and 3B may be different from angles shown in the operational example (1) for convenience of illustration.

In the operational example (1), the actuator 25 is controlled such that a rotational directional component force angle $\Phi$V is maintained constant or substantially constant when the first arm 9A rotates around the pivot shaft P. The rotational directional component force angle $\Phi$V is an angle between a rear arm axis PRv and the chain virtual line L. The rear arm axis PRv is a straight line connecting the pivot shaft P and the rear axle R. Here, the rotational directional component force angle $\Phi$V corresponds to the chain virtual line-rear arm axis angle in the present teaching.

As shown in FIG. 3A, the rear arm angle $\Phi$raV is different from the conventional rear arm angle $\Phi$ra. The rear arm angle $\Phi$raV is an angle formed by the rear arm axis PRv and the drive pivot axis DP.

The rear arm angle $\Phi$raV is geometrically calculated based on the detected first arm angle $\Phi$hp. The first arm angle $\Phi$hp is an angle formed by the drive pivot axis DP and the first arm axis PM. The first arm angle $\Phi$hp is measured by an angle sensor provided on the pivot shaft P. The bending angle $\Phi$ma is measured by an angle sensor provided on the rotary shaft M.

When the first arm 9A rotates around the pivot shaft P, the main arm 9B rotates around the rotary shaft M in the direction opposite to the first arm 9A. Therefore, when the stroke amount of the rear suspension 15 is the same, an absolute value of the rear arm angle $\Phi$raV is smaller than that of the conventional rear arm angle $\Phi$ra. The rear arm angle $\Phi$raV may be a negative value. Therefore, a magnitude of the angle here is a magnitude of the absolute value of the angle.

In the operational example (1), when the first arm 9A rotates around the pivot shaft P, the rotational directional component force angle $\Phi$V is maintained constant or substantially constant.

The rotational directional component force FrotV is obtained with the rotational directional component force angle $\Phi$V. That is, Equation (3) described above is expressed by the following Equation (5) in the operational example (1).

$$\text{FrotV} = \text{Fch} \cdot \sin\Phi V = \text{Fch} \cdot \sin(\Phi raV - \Phi 2s + \psi) \quad (5)$$

When the rear arm angle $\Phi raV$ increases in the positive or negative direction, the range of change in the rear arm angle $\Phi raV$ is smaller than that of the conventional rear arm angle $\Phi ra$. That is, the rear arm angle $\Phi raV$ is smaller than the conventional rear arm angle $\Phi ra$. Therefore, when the rear arm angle $\Phi raV$ increases in the positive or negative direction, a value $(\Phi raV - \Phi 2s + \Psi)$ can be controlled to be constant or substantially constant. Therefore, the rotational directional component force angle $\Phi V$ can be controlled to a constant or substantially constant magnitude. In the operational example (1), the rear arm 9 bends at the bending angle $\Phi ma$ at which the rotational directional component force angle $\Phi V$ is made constant or substantially constant. Therefore, in the operational example (1), the rotational directional component force Frot has a constant or substantially constant magnitude.

The chain force factor FchfacV is obtained with the rotational directional component force FrotV and the component force-to-ground perpendicular angle $\Theta V$. That is, Equation (4) described above is expressed by the following Equation (6) in the operational example (1).

$$\text{FchfacV} = \text{FrotV} \cdot \cos\Theta V \quad (6)$$

The component force-to-ground perpendicular angle $\Theta V$ is an angle formed by a perpendicular O to the road surface GL and a virtual line N along the rotational directional component force FrotV. The rotational directional component force FrotV is constant or substantially constant. Accordingly, even if the component force-to-ground perpendicular angle $\Theta V$ is inconstant or substantially inconstant, the range of change in the chain force factor FchfacV is smaller than that in the conventional one. Here, the angle to ground $\alpha V$ is equal to the component force-to-ground perpendicular angle $\Theta V$.

As a result, the changes in the rear wheel vertical load and the gripping force can be reduced.

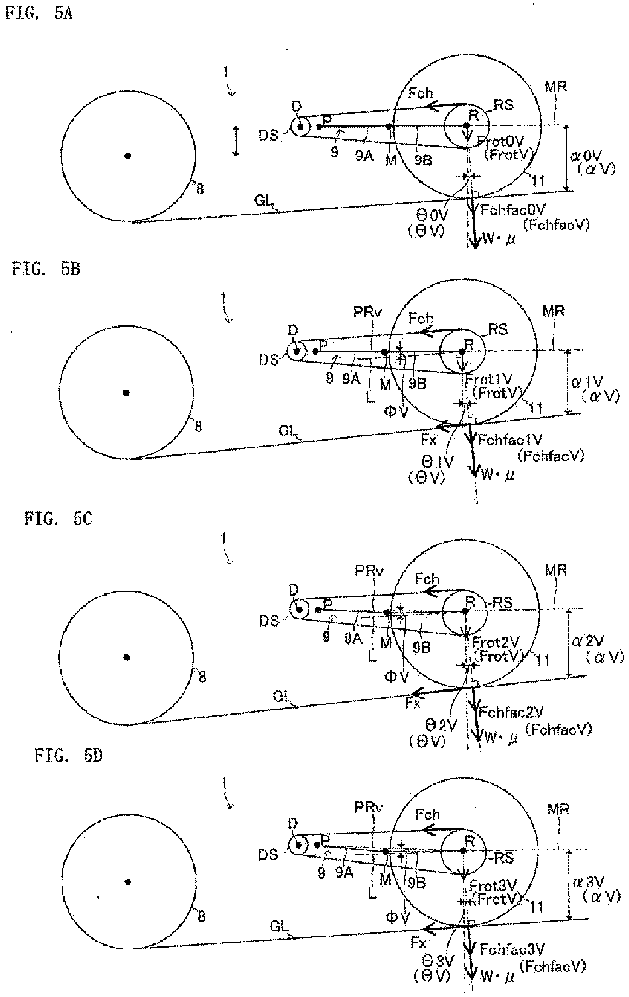

The following describes an operational example (1) of the rear arm 9 of the present teaching with reference to FIGS. 5A to 5D, FIGS. 6 to 8B, 12A, 13A, and 14A to 15B.

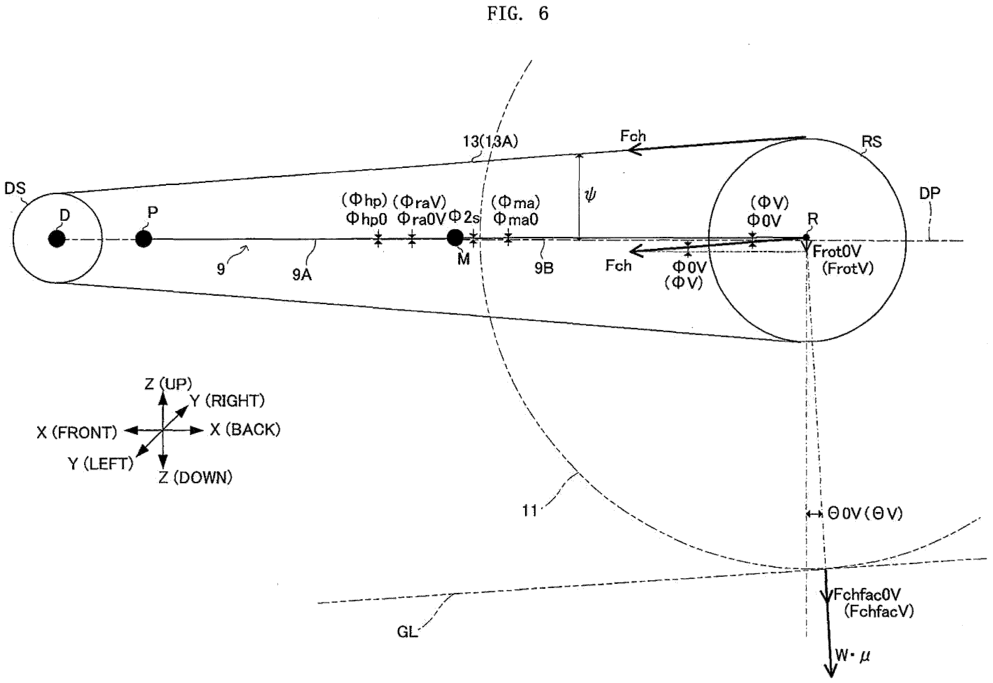

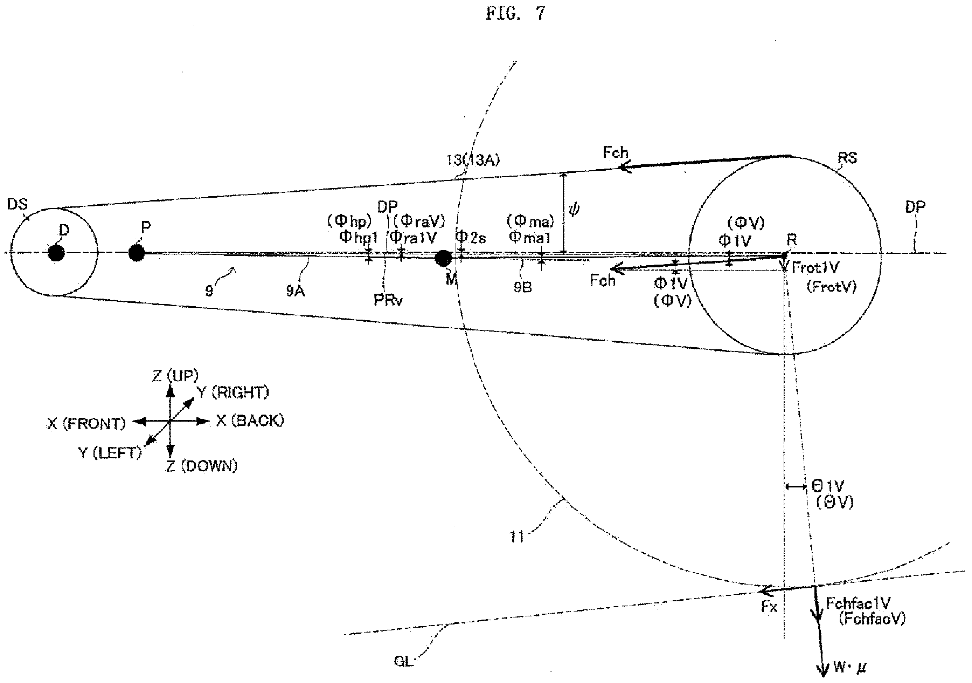

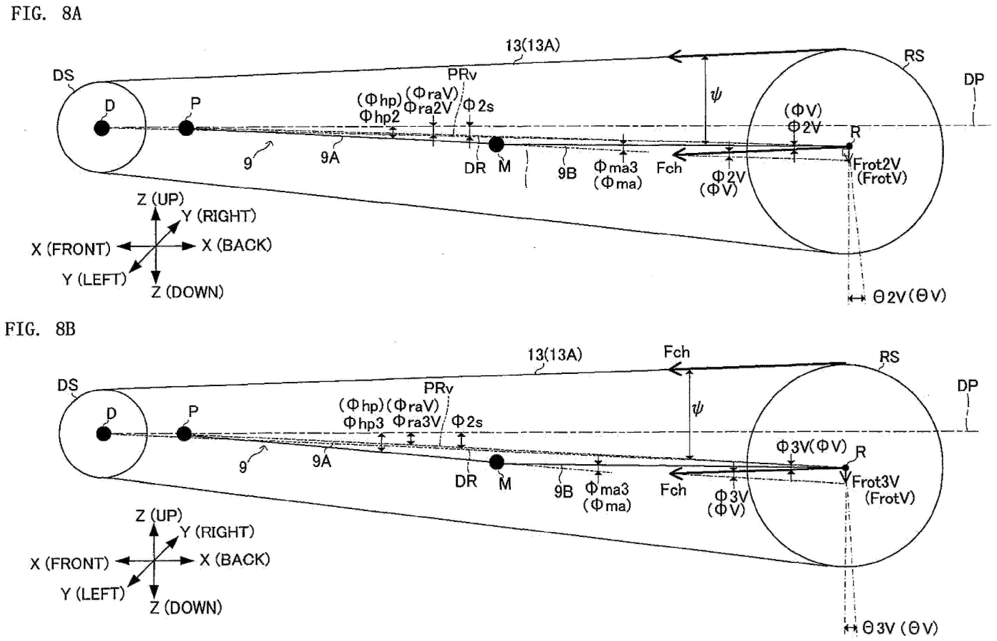

FIGS. 5A to 5D are diagrams for explaining the operational example (1) of the rear arm 9 of the present teaching. FIG. 6 is an enlarged view of the rear arm 9 shown in FIG. 5A. FIG. 7 is an enlarged view of the rear arm 9 shown in FIG. 5B. FIG. 8A is an enlarged view of the rear arm 9 shown in FIG. 5C. FIG. 8B is an enlarged view of the rear arm 9 shown in FIG. 5D. Here in FIGS. 6 and 7, the rear wheel 11 and the road surface GL are shown. In other drawings, the rear wheel 11 and the road surface GL are omitted.

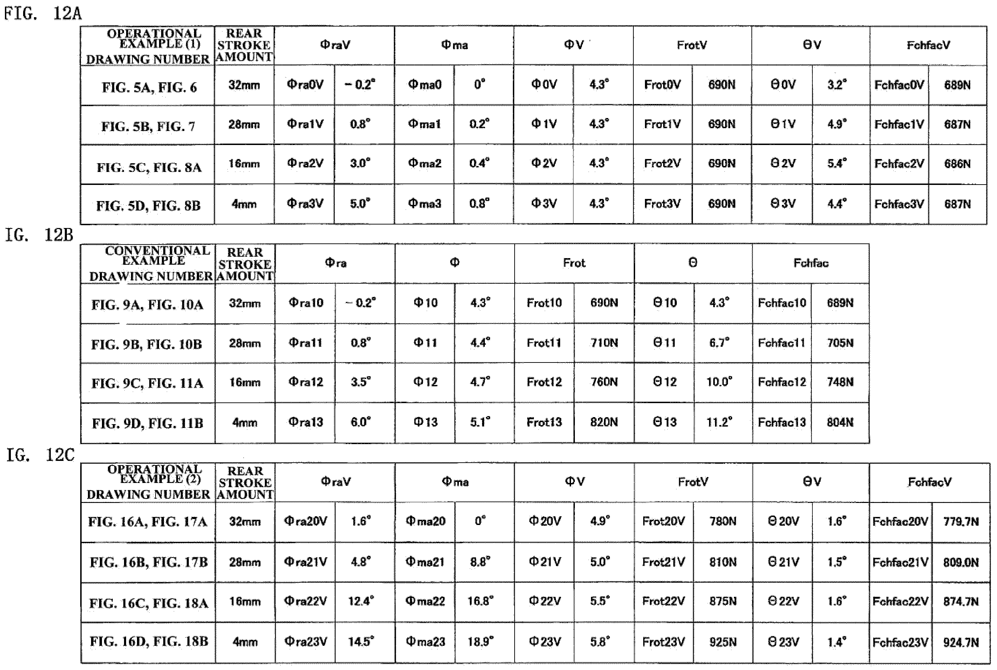

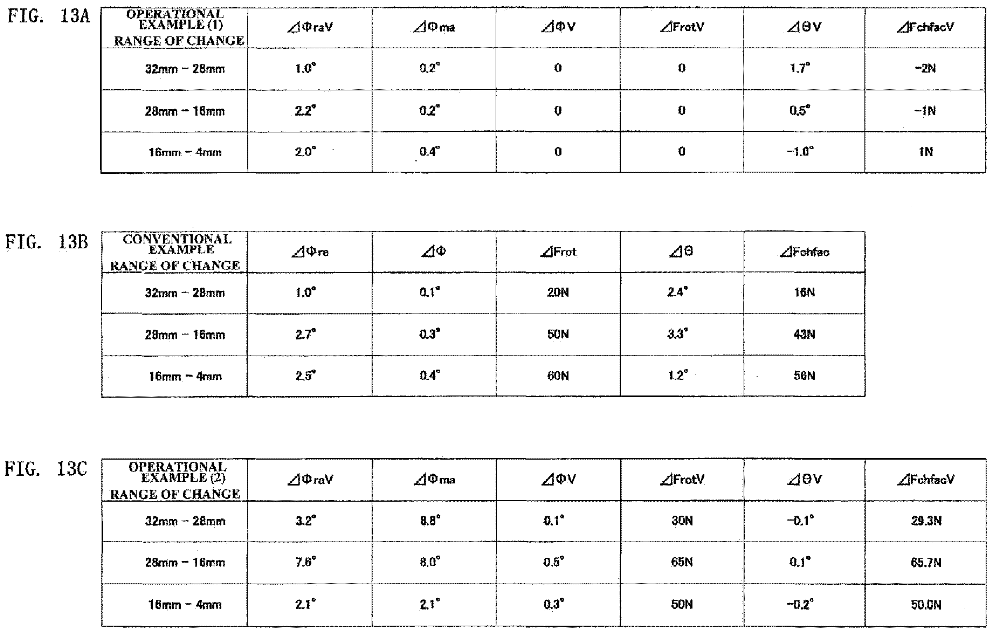

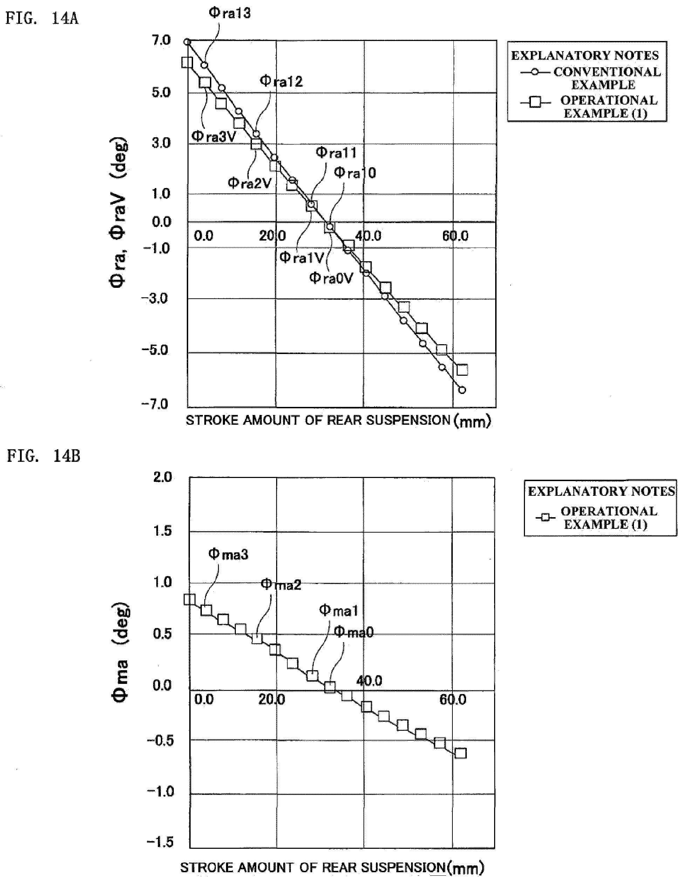

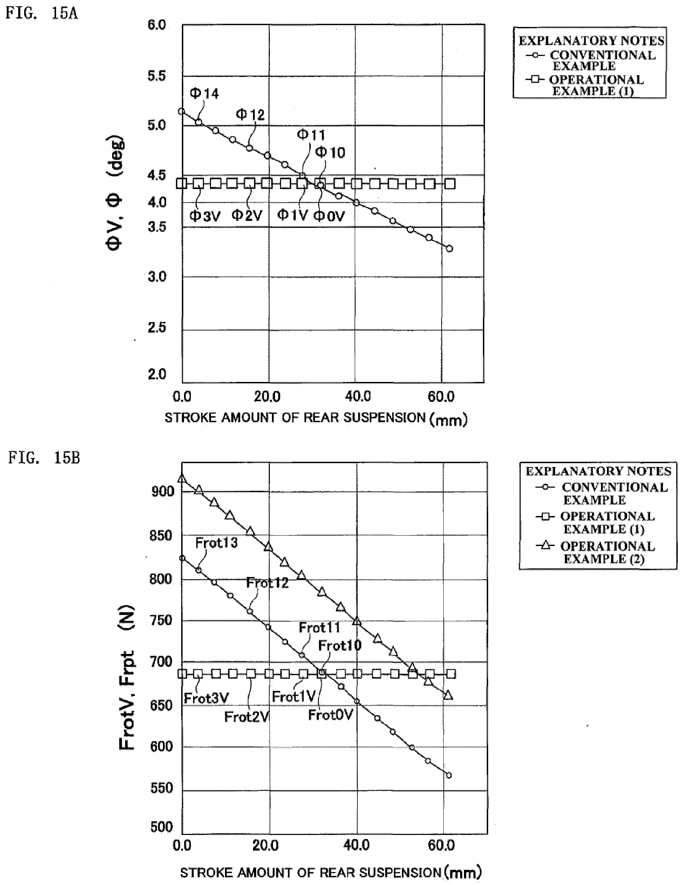

FIG. 12A is a table showing values of respective elements of the rear arm 9 according to an operational example (1). FIG. 13A is a table showing ranges of changes in the respective elements of the rear arm 9 according to the operational example (1). FIG. 14A is a graph showing a relationship between a stroke amount of the rear suspension 15 and a rear arm angle $\Phi raV$ according to the operational example (1). FIG. 14B is a graph showing a relationship between the stroke amount of the rear suspension 15 and a bending angle $\Phi ma$ according to the operational example (1). FIG. 15A is a graph showing a relationship between the stroke amount of the rear suspension 15 and a rotational directional component force angle $\Phi V$ according to the operational example (1). FIG. 15B is a graph showing a relationship between the stroke amount of the rear suspension 15 and a rotational directional component force FrotV according to the operational example (1).

FIGS. 5A and 6 each show the rear arm 9 when the pivot shaft P, the rotary shaft M, and the rear axle R are aligned on a straight line. As shown in FIG. 6, the rotary shaft M is located slightly above the drive pivot axis DP. The rear arm axis PRv is inclined slightly upward from the drive pivot axis DP. Here in FIG. 6, the rear arm axis PRv is omitted.

In FIGS. 6 to 8B, the rear arm angle $\Phi raV$ is to be described by taking rear arm angles $\Phi ra0V$, $\Phi ra1V$, $\Phi ra2V$, and $\Phi ra3V$ as examples in accordance with four rear stroke amounts of 32 mm, 16 mm, 8 mm, and 4 mm. A change from $\Phi ra0V$ to $\Phi ra1V$, a change from $\Phi ra1V$ to $\Phi ra2V$, and a change from $\Phi ra2V$ to $\Phi ra3V$ indicate a state where the straddled vehicle 1 accelerates. A change from $\Phi ra3V$ to $\Phi ra2V$, a change from $\Phi ra2V$ to $\Phi ra1V$, and a change from $\Phi ra1V$ to $\Phi ra0V$ indicate a state where the straddled vehicle 1 decelerates.

Moreover, the first arm angle $\Phi hp$ is to be described by taking $\Phi hp0$, $\Phi hp1$, $\Phi hp2$, and $\Phi hp3$ as examples in accordance with the four rear stroke amounts described above. A change from $\Phi hp0$ to $\Phi hp1$, a change from $\Phi hp1$ to $\Phi hp2$, and a change from $\Phi hp2$ to $\Phi hp3$ indicate a state where the straddled vehicle 1 accelerates. A change from $\Phi hp3$ to $\Phi hp2$, a change from $\Phi hp2$ to $\Phi hp1$, and a change from $\Phi hp1$ to $\Phi hp0$ indicate a state where the straddled vehicle 1 decelerates.

The bending angle $\Phi ma$ is to be described by taking $\Phi ma0$, $\Phi ma1$, $\Phi ma2$, and $\Phi ma3$ as examples in accordance with the four rear stroke amounts described above. A change from $\Phi ma0$ to $\Phi ma1$, a change from $\Phi ma1$ to $\Phi ma2$, and a change from $\Phi ma2$ to $\Phi ma3$ indicate a state where the straddled vehicle 1 accelerates. A change from $\Phi ma3$ to $\Phi ma2$, a change from $\Phi ma2$ to $\Phi ma1$, and a change from $\Phi ma1$ to $\Phi ma0$ indicate a state where the straddled vehicle 1 decelerates.

The rotational directional component force angle $\Phi V$ is to be described by taking $\Phi 0V$, $\Phi 1V$, $\Phi 2V$, and $\Phi 3V$ as examples in accordance with the four rear stroke amounts described above. In the operational example (1), $\Phi 0V$, $\Phi 1V$, $\Phi 2V$, and $\Phi 3V$ are controlled to be constant or substantially constant.

The rotational directional component force FrotV is to be described by taking Frot0V, Frot1V, Frot2V, and Frot3V as examples in accordance with the four rear stroke amounts described above. In the operational example (1), Frot0V, Frot1V, Frot2V, and Frot3V are controlled to be constant or substantially constant.

Moreover, the component force-to-ground perpendicular angle ΘV is to be described by taking Θ0V, Θ1V, Θ2V, Θ3V as examples in accordance with the four rear stroke amounts described above. A change from Θ0V to Θ1V, a change from Θ1V to Θ2V, and a change from Θ2V to Θ3V indicate a state where the straddled vehicle 1 accelerates. A change from Θ3V to Θ2V, a change from Θ2V to Θ1V, and a change from Θ1V to Θ0V indicate a state where the straddled vehicle 1 decelerates.

The chain force factor FchfacV is to be described by taking Fchfac0V, Fchfac1V, Fchfac2V, and Fchfac3V as examples in accordance with the four rear stroke amounts described above. A change from Fchfac0V to Fchfac1V, a change from Fchfac1V to Fchfac2V, and a change from Fchfac2V to Fchfac3V indicate a state where the straddled vehicle 1 accelerates. A change from Fchfac3V to Fchfac2V, a change from Fchfac2V to Fchfac1V, and a change from Fchfac1V to Fchfac0V indicate a state where the straddled vehicle 1 decelerates.

In FIGS. 5A and 6, the stroke amount of the rear suspension 15 (not shown) is, for example, 32 mm. At this time, as shown in FIG. 6, the rear arm angle ΦraV corresponds to the rear arm angle Φra0V. The bending angle Φma corresponds to the bending angle Φma0. The rotational directional component force angle ΦV corresponds to the rotational directional component force angle Φ0V. The rotational directional component force FrotV corresponds to the rotational directional component force Frot0V. The component force-to-ground perpendicular angle ΘV correspond to the component force-to-ground perpendicular angle Θ0V. The chain force factor FchfacV corresponds to the chain force factor Fchfac0V.

As shown in FIG. 12A, the rear arm angle Φra0V is, for example, - 0.2 degrees. The bending angle Φma0 is 0 degree. The rotational directional component force angle Φ0V is, for example, 4.3 degrees. The rotational directional component force Frot0V is, for example, approximately 690 N. The component force-to-ground perpendicular angle Θ0V is, for example, approximately 3.2 degrees. The chain force factor Fchfac0V is approximately 689 N when the rotational directional component force Frot0V is multiplied by cosΘ0V from Equation (6) described above.

Reference is next made to FIGS. 5B and 7. FIGS. 5B and 7 show a rear arm 9 which is modified from that of FIGS. 5A and 6, for example.

In FIGS. 5B and 7, the stroke amount of the rear suspension 15 (not shown) is, for example, 28 mm. At this time, as shown in FIG. 7, the rear arm angle ΦraV corresponds to the rear arm angle Φra1V. The bending angle Φma corresponds to the bending angle Φma1. The rotational directional component force angle ΦV corresponds to the rotational directional component force angle Φ1V. The rotational directional component force FrotV corresponds to the rotational directional component force Frot1V. The component force-to-ground perpendicular angle ΘV correspond to the component force-to-ground perpendicular angle Θ1V. The chain force factor FchfacV corresponds to the chain force factor Fchfac1V.

As shown in FIG. 12A, the rear arm angle Φra1V is, for example, 0.8 degrees. The bending angle Φma1 is 0.2 degrees. The rotational directional component force angle Φ1V is, for example, 4.3 degrees. The rotational directional component force Frot1V is, for example, approximately 690 N. The component force-to-ground perpendicular angle Θ1V is, for example, approximately 4.9 degrees. The chain force factor Fchfac1V is approximately 687 N when the rotational directional component force Frot1V is multiplied by cosΘ1V from Equation (6) described above.

As shown in FIG. 13A, when the stroke amount of the rear suspension 15 changes from 32 mm to 28 mm, the difference Φra of the rear arm angle ΦraV is 1.0 degrees. In the drawings, the difference is represented by a symbol "delta". For the bending angle Φma, the difference Φma is 0.2 degrees. For the rotational directional component force angle ΦV, the difference ΦV is 0 degree. For the rotational directional component force FrotV, the difference FrotV is 0 N. For the rotational directional component force angle ΦV, the difference ΦV is 1.7 degrees. For the chain force factor FchfacV, the difference FchfacV is - 2 N.

Reference is next made to FIGS. 5C and 8A. FIGS. 5C and 8A each show a rear arm 9 modified from those of FIGS. 5B and 7, respectively, for example.

In FIGS. 5C and 8A, the rotary shaft M is positioned slightly lower than the rear arm axis PRv, as compared with FIGS. 5B and 7.

In FIGS. 5C and 8A, the stroke amount of the rear suspension 15 (not shown) is, for example, 16 mm. At this time, as shown in FIG. 8A, the rear arm angle ΦraV corresponds to the rear arm angle Φra2V. The bending angle Φma corresponds to the bending angle Φma2. The rotational directional component force angle ΦV corresponds to the rotational directional component force angle Φ2V. The rotational directional component force FrotV corresponds to the rotational directional component force Frot2V. The component force-to-ground perpendicular angle ΘV correspond to the component force-to-ground perpendicular angle Θ2V. The chain force factor FchfacV shown in FIG. 5C corresponds to the chain force factor Fchfac2V.

As shown in FIG. 12A, the rear arm angle Φra2V is, for example, 3.0 degrees. The bending angle Φma2 is 0.4 degrees. The rotational directional component force angle Φ2V is, for example, 4.3 degrees. The rotational directional component force Frot2V is, for example, approximately 690 N. The component force-to-ground perpendicular angle Θ2V is, for example, approximately 5.4 degrees. The chain force factor Fchfac2V is approximately 686 N when the rotational directional component force Frot2V is multiplied by cosΘ2V from Equation (6) described above.

As shown in FIG. 13A, when the stroke amount of the rear suspension 15 changes from 28 mm to 16 mm, the difference $\Phi$ra of the rear arm angle $\Phi$raV is 2.2 degrees. For the bending angle $\Phi$ma, the difference $\Phi$ma is 0.2 degrees. For the rotational directional component force angle $\Phi$V, the difference $\Phi$V is 0 degree. For the rotational directional component force FrotV, the difference FrotV is 0 N. For the rotational directional component force angle $\Phi$V, the difference $\Phi$V is 0.5 degrees. For the chain force factor FchfacV, the difference FchfacV is -1 N.

Reference is next made to FIGS. 5D and 8B. FIGS. 5D and 8B each show a rear arm 9 modified from those of FIGS. 5C and 8A, respectively, for example.

In FIGS. 5D and 8B, the rotary shaft M is positioned slightly lower than the rear arm axis PRv, as compared with FIGS. 5C and 8A.

In FIGS. 5D and 8B, the stroke amount of the rear suspension 15 (not shown) is, for example, 4 mm. At this time, as shown in FIG. 8B, the rear arm angle $\Phi$raV corresponds to the rear arm angle $\Phi$ra3V. The bending angle $\Phi$ma corresponds to the bending angle $\Phi$ma3. The rotational directional component force angle $\Phi$V corresponds to the rotational directional component force angle $\Phi$3V. The rotational directional component force FrotV corresponds to the rotational directional component force Frot3V. The component force-to-ground perpendicular angle $\Theta$V correspond to the component force-to-ground perpendicular angle $\Theta$3V. The chain force factor FchfacV shown in FIG. 5D corresponds to the chain force factor Fchfac3V.

As shown in FIG. 12A, the rear arm angle $\Phi$ra3V is, for example, 5.0 degrees. The bending angle $\Phi$ma3 is 0.8 degrees. The rotational directional component force angle $\Phi$3V is, for example, 4.3 degrees. The rotational directional component force Frot3V is, for example, approximately 690 N. The component force-to-ground perpendicular angle $\Theta$3V is, for example, approximately 4.4 degrees. The chain force factor Fchfac3V is approximately 687 N when the rotational directional component force Frot3V is multiplied by cos$\Theta$3V from Equation (6) described above.

As shown in FIG. 13A, when the stroke amount of the rear suspension 15 changes from 16 mm to 4 mm, the difference $\Phi$ra of the rear arm angle $\Phi$raV is 2.0 degrees. For the bending angle $\Phi$ma, the difference $\Phi$ma is 0.4 degrees. For the rotational directional component force angle $\Phi$V, the difference $\Phi$V is 0 degree. For the rotational directional component force FrotV, the difference FrotV is 0 N. For the rotational directional component force angle $\Phi$V, the difference $\Phi$V is -1.0 degrees. For the chain force factor FchfacV, the difference FchfacV is 1 N.

In this way, in the operational example (1), the bending angle $\Phi$ma increases as the rear arm angle $\Phi$raV increases. In contrast to this, the rotational directional component force angle $\Phi$V is constant. Thus, the variation range of the rotational directional component force Frot is small. Moreover, the variation range of the chain force factor FchfacV is also small. Thus, even if the component force-to-ground perpendicular angle $\Theta$V varies, the variation range of the chain force factor FchfacV is small.

Moreover, if the chain force Fch is constant, the rotational directional component force FrotV is constant. Thus, even if the component force-to-ground perpendicular angle $\Theta$V varies, the variation range of the chain force factor FchfacV is further small.

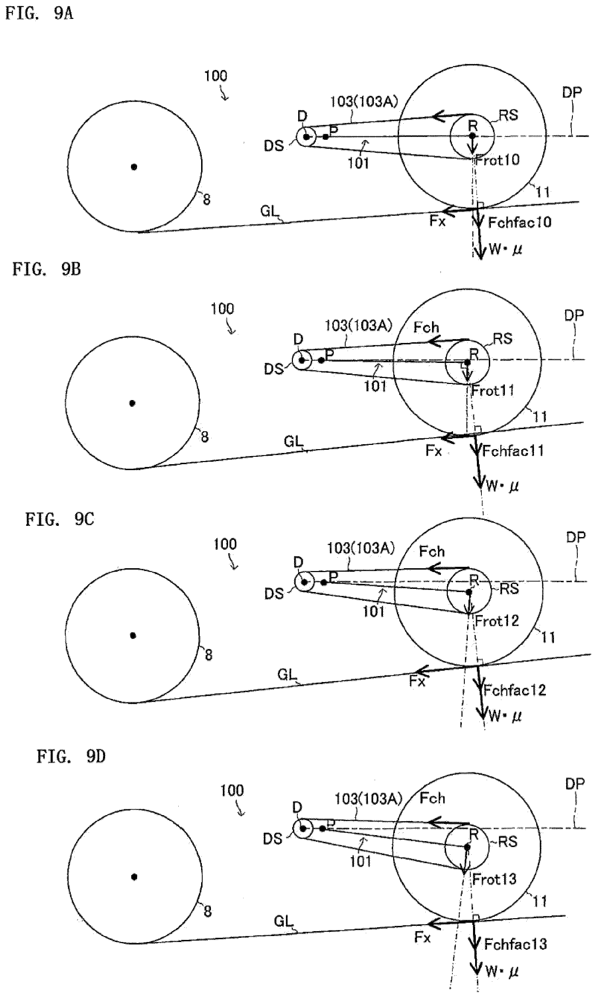

The following describes operation of the rear arm 101 in the conventional example with reference to FIGS. 9A to 11B, 12B, 13B, 14A, 15A, and 15B.

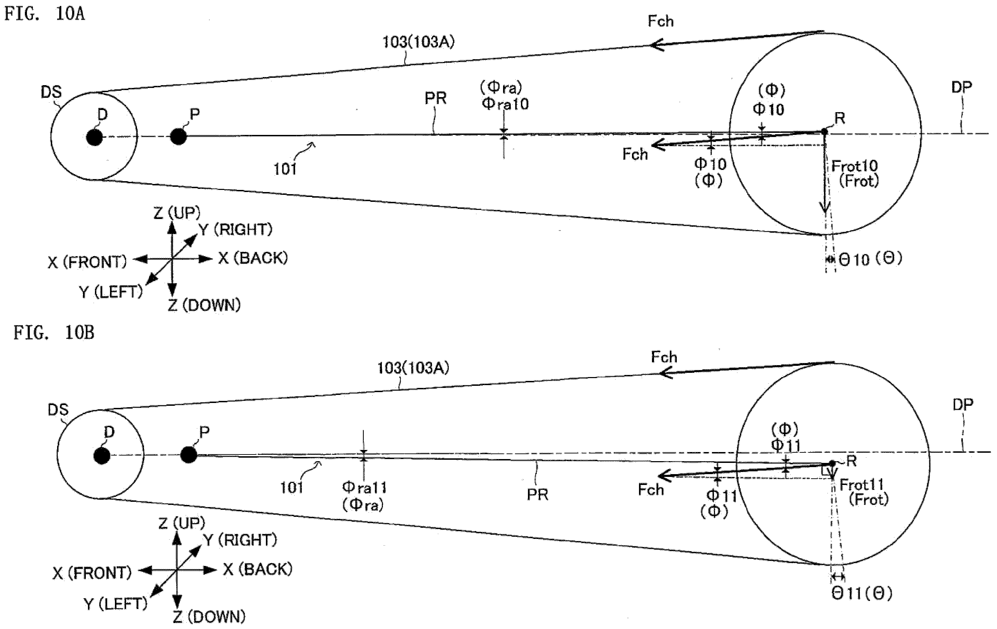

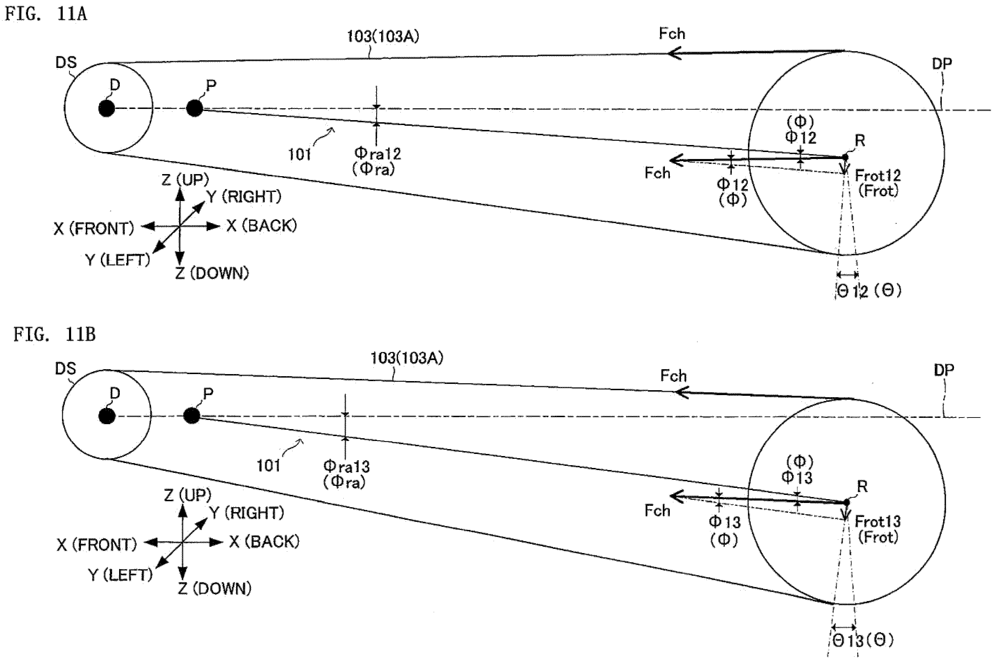

FIGS. 9A to 9D are diagrams for explaining operation of a currently-used rear arm 101. FIG. 10A is an enlarged view of the rear arm 101 shown in FIG. 9A. FIG. 10B is an enlarged view of the rear arm 101 shown in FIG. 9B. FIG. 11A is an enlarged view of the rear arm 101 shown in FIG. 9C. FIG. 11B is an enlarged view of the rear arm 101 shown in FIG. 9D.

FIG. 12B is a table showing values of respective elements of the rear arm 101. FIG. 13B is a table showing ranges of changes in respective elements of the rear arm 101. FIG. 14A is a graph showing a relationship between a stroke amount of the rear suspension 15 and a rear arm angle $\Phi$ra. FIG. 15A is a graph showing a relationship between the stroke amount of the rear suspension 15 and a rotational directional component force angle $\Phi$. FIG. 15B is a graph showing a relationship between the stroke amount of the rear suspension 15 and the rotational directional component force Frot.

In FIGS. 10A to 11B, the rear arm angle $\Phi$ra is to be described by taking rear arm angles $\Phi$ra10, $\Phi$ra11, $\Phi$ra12, and $\Phi$ra13 as examples in accordance with four rear stroke amounts of 32 mm, 16 mm, 8 mm, and 4 mm. A change from $\Phi$ra10 to $\Phi$ra11, a change from $\Phi$ra11 to $\Phi$ra12, and a change from $\Phi$ra12 to $\Phi$ra13 indicate a state where the straddled vehicle 100 accelerates. A change from $\Phi$ra13 to $\Phi$ra12, a change from $\Phi$ra12 to $\Phi$ra11, and a change from $\Phi$ra11 to $\Phi$ra10 indicate a state where the straddled vehicle 100 decelerates.

The rotational directional component force angle $\Phi$ is to be described by taking $\Phi$10, $\Phi$11, $\Phi$12, and $\Phi$13 as examples in accordance with the four rear stroke amounts described above. A change from $\Phi$10 to $\Phi$11, a change from $\Phi$11 to $\Phi$12, and a change from $\Phi$12 to $\Phi$13 indicate a state where the straddled vehicle 100 accelerates. A change from $\Phi$13 to $\Phi$12, a change from $\Phi$12 to $\Phi$11, and a change from $\Phi$11 to $\Phi$10 indicate a state where the straddled vehicle 100 decelerates.

Moreover, the rotational directional component force Frot will be described by taking Frot10, Frot11, Frot12, and Frot13 as examples in accordance with the four rear stroke amounts described above. A change from Frot10 to Frot11, a change from Frot11 to Frot12, and a change from Frot12 to Frot13 indicate a state where the straddled vehicle 100 accelerates. A change from Frot13 to Frot12, a change from Frot12 to Frot11, and a change from Frot11 to Frot10 indicate a state where the straddled vehicle 100 decelerates.

Moreover, the component force-to-ground perpendicular angle $\Theta$ is to be described by taking $\Theta10$, $\Theta11$, $\Theta12$, $\Theta13$ as examples in accordance with the four rear stroke amounts described above. A change from $\Theta10$ to $\Theta11$, a change from $\Theta11$ to $\Theta12$, and a change from $\Theta12$ to $\Theta13$ indicate a state where the straddled vehicle 100 accelerates. A change from $\Theta13$ to $\Theta12$, a change from $\Theta12$ to $\Theta11$, and a change from $\Theta11$ to $\Theta10$ indicate a state where the straddled vehicle 100 decelerates.

The following further describes the chain force factor Fchfac by taking Fchfac10, Fchfac11, Fchfac12, and Fchfac13 as examples in accordance with the four rear stroke amounts described above. A change from Fchfac10 to Fchfac11, a change from Fchfac11 to Fchfac12, and a change from Fchfac12 to Fchfac13 indicate a state where the straddled vehicle 100 accelerates. A change from Fchfac13 to Fchfac12, a change from Fchfac12 to Fchfac11, and a change from Fchfac11 to Fchfac10 indicate a state where the straddled vehicle 100 decelerates.

Reference is next made to FIGS. 9A and 10A. In the rear arm 101 shown in FIGS. 9A and 10A, the rear arm axis PR is inclined slightly upward from the drive pivot axis DP.

In FIGS. 9A and 10A, the stroke amount of the rear suspension 15 (not shown) is, for example, 32 mm. At this time, as shown in FIG. 10A, the rotational directional component force angle $\Phi$ corresponds to the rotational directional component force angle $\Phi10$. The rotational directional component force Frot corresponds to the rotational directional component force Frot10. The component force-to-ground perpendicular angle $\Theta$ correspond to the component force-to-ground perpendicular angle $\Theta10$. The chain force factor Fchfac shown in FIG. 9A corresponds to the chain force factor Fchfac10.

As shown in FIG. 12B, the rear arm angle $\Phi ra10$ is, for example, - 0.2 degrees. The rotational directional component force angle $\Phi10$ is, for example, 4.3 degrees. The rotational directional component force Frot10 is, for example, approximately 690 N. The component force-to-ground perpendicular angle $\Theta10$ is, for example, approximately 4.3 degrees. The chain force factor Fchfac10 is approximately 689 N when the rotational directional component force Frot10 is multiplied by $\cos\Theta10$ from Equation (4) described above.

Next, FIGS. 9B and 10B each show the rear arm 101 modified from those of FIGS. 9A and 10A, respectively, for example.

The rear arm 101 shown in FIGS. 9B and 10B rotates clockwise around the pivot shaft P in left side view from the state shown in FIGS. 9A and 10A, for example. The rear arm axis PR is inclined slightly downward from the drive pivot axis DP.

In FIGS. 9B and 10B, the stroke amount of the rear suspension 15 (not shown) is, for example, 28 mm. At this time, as shown in FIG. 10B, the rear arm angle $\Phi ra$ corresponds to the rear arm angle $\Phi ra11$. The rotational directional component force angle $\Phi$ corresponds to the rotational directional component force angle $\Phi11$. The rotational directional component force Frot corresponds to the rotational directional component force Frot11. The component force-to-ground perpendicular angle $\Theta$ correspond to the component force-to-ground perpendicular angle $\Theta11$. The chain force factor Fchfac shown in FIG. 9B corresponds to the chain force factor Fchfac11.

As shown in FIG. 12B, the rear arm angle $\Phi ra11$ is, for example, 0.8 degrees. The rotational directional component force angle $\Phi11$ is, for example, 4.4 degrees. The rotational directional component force Frot11 is, for example, approximately 710 N. The rotational directional component force Frot11 is approximately 710 N. The component force-to-ground perpendicular angle $\Theta11$ is, for example, approximately 6.7 degrees. The chain force factor Fchfac11 is approximately 705 N when the rotational directional component force Frot11 is multiplied by $\cos\Theta11$ from Equation (4) described above.

As shown in FIG. 13B, when the stroke amount of the rear suspension 15 changes from 32 mm to 28 mm, the difference $\Phi ra$ for the rear arm angle $\Phi ra$ is 1.0 degrees. For the rotational directional component force angle $\Phi$, the difference $\Phi$ is 0.1 degrees. For the rotational directional component force Frot, the difference Frot is 20 N. For the component force-to-ground perpendicular angle $\Theta$, the difference $\Theta$ is 2.4 degrees. For the chain force factor Fchfac, the difference Fchfac is 16 N.

Next, FIGS. 9C and 11A each show the rear arm 101 modified from those of FIGS. 9B and 10C, respectively, for example.

The rear arm 101 shown in FIGS. 9C and 11A rotates clockwise around the pivot shaft P in left side view from the state shown in FIGS. 9B and 10B, for example. The rear arm axis PR is inclined downward from the state shown in FIGS. 9B and 10B.

In FIGS. 9C and 11A, the stroke amount of the rear suspension 15 (not shown) is, for example, 16 mm. At this time, as shown in FIG. 11A, the rear arm angle $\Phi ra$ corresponds to the rear arm angle $\Phi ra12$. The rotational directional component force angle $\Phi$ corresponds to the rotational directional component force angle $\Phi12$. The rotational directional component force Frot corresponds to the rotational directional component force Frot12. The component force-to-ground perpendicular angle $\Theta$ correspond to the component force-to-ground perpendicular angle $\Theta12$. The chain force factor Fchfac shown in FIG. 9C corresponds to the chain force factor Fchfac12.

As shown in FIG. 12B, the rear arm angle $\Phi ra12$ is, for example, 3.5 degrees.

The rotational directional component force angle $\Phi12$ is, for example, 4.7 degrees. The rotational directional component force Frot12 is, for example, approximately 760 N. The component force-to-ground perpendicular angle $\Theta12$ is, for example, approximately 10.0 degrees. The chain force factor Fchfac is approximately 748 N when the rotational directional component force Frot12 is multiplied by $\cos\Theta12$ from Equation (4) described above.

As shown in FIG. 13B, when the stroke amount of the rear suspension 15 changes from 28 mm to 16 mm, the difference $\Phi$ra of the rear arm angle $\Phi$ra is 2.7 degrees. For the rotational directional component force angle $\Phi$, the difference $\Phi$ is 0.3 degrees. For the rotational directional component force Frot, the difference Frot is 50 N. For the component force-to-ground perpendicular angle $\Theta$, the difference $\Theta$ is 3.3 degrees. For the chain force factor Fchfac, the difference Fchfac is 43 N.

Next, FIGS. 9D and 11B each show the rear arm 101 modified from those of FIGS. 9C and 11A, respectively, for example.

The rear arm 101 shown in FIGS. 9D and 11B rotates clockwise around the pivot shaft P in left side view from the state shown in FIGS. 9C and 11A, for example. The rear arm axis PR is inclined downward as compared with the case where the rear stroke amount is 16 mm.

In FIGS. 9D and 11B, the stroke amount of the rear suspension 15 (not shown) is, for example, 4 mm. At this time, as shown in FIG. 11B, the rear arm angle $\Phi$ra corresponds to the rear arm angle $\Phi$ra13. The rotational directional component force angle $\Phi$ corresponds to the rotational directional component force angle $\Phi13$. The rotational directional component force Frot corresponds to the rotational directional component force Frot13. The component force-to-ground perpendicular angle $\Theta$ correspond to the component force-to-ground perpendicular angle $\Theta13$. The chain force factor Fchfac corresponds to the chain force factor Fchfac13.

As shown in FIG. 12B, the rear arm angle $\Phi$ra13 is, for example, 6.0 degrees. The rotational directional component force angle $\Phi13$ is, for example, 5.1 degrees. The rotational directional component force Frot13 is, for example, approximately 820 N. The component force-to-ground perpendicular angle $\Theta13$ is, for example, approximately 11.2 degrees. The chain force factor Fchfac13 is 804 N when the rotational directional component force Frot13 is multiplied by $\cos\Theta13$ from Equation (4) described above.

As shown in FIG. 13B, when the stroke amount of the rear suspension 15 changes from 16 mm to 4 mm, the difference $\Phi$ra of the rear arm angle $\Phi$ra is 2.5 degrees. For the rotational directional component force angle $\Phi$, the difference $\Phi$ is 0.4 degrees. For the rotational directional component force Frot, the difference Frot is 60 N. For the component force-to-ground perpendicular angle $\Theta$, the difference $\Theta$ is 1.2 degrees. For the chain force factor Fchfac, the difference Fchfac is 56 N.

From the above, comparison is made between the operation of the rear arm 9 in the operational example (1) and the operation of the rear arm 101 in the conventional example.

In the operational example (1), the rotational directional component force angle $\Phi$V is made constant or substantially constant by the control of the actuator 25. Since the rotational directional component force angle $\Phi$V is constant or substantially constant, the chain force Fch is multiplied by a constant or substantially constant reduction rate (sin$\Phi$V). Therefore, the rotational directional component force FrotV varies less than that of the conventional rear arm 101. The rotational directional component force FrotV is multiplied by a reduction rate (cos$\Theta$V) based on component force-to-ground perpendicular angle $\Theta$V. Therefore, the chain force factor FchfacV varies less than that of the conventional rear arm 101. As a result, the straddled vehicle 1 can adjust the gripping force of the rear wheel 11.

Moreover, in the operational example (1), when the chain force Fch is constant or substantially constant, a constant or substantially constant rotational directional component force FrotV can be generated. The rotational directional component force FrotV is multiplied by a reduction rate (cos$\Theta$V) based on the component force-to-ground perpendicular angle $\Theta$V, whereby the chain force factor FchfacV is determined. The chain force factor FchfacV is almost as large as the rotational directional component force FrotV. The variation range of the chain force factor FchfacV is extremely small. As a result, the straddled vehicle 1 can adjust the gripping force of the rear wheel 11.

By adjusting the gripping force of the rear wheel 11, the driver can easily predict acceleration and deceleration of the straddled vehicle 1 to be reached in accordance with the throttle operation amount. Therefore, a deviation between the acceleration and deceleration predicted in response to the throttle operation and the actual acceleration and deceleration is unlikely to occur.

8. Operational Example (2) of Rear Arm

An operational example (2) is to be described with reference to FIGS. 12C, 13C, 15B, and FIGS. 16A to 18B. In the operational example (2), the description with graphs shown in FIGS. 14A, 14B, and 15A is omitted for convenience of illustration.

FIG. 12C is a table showing values of respective elements of the rear arm 9 according to the operational example (2). FIG. 13C is a table showing ranges of changes in respective elements of the rear arm 9 according to the operational example (2). FIG. 15C is a graph showing a relationship between the stroke amount of the rear suspension 15 and a rotational directional component force FrotV according to the operational example (2).

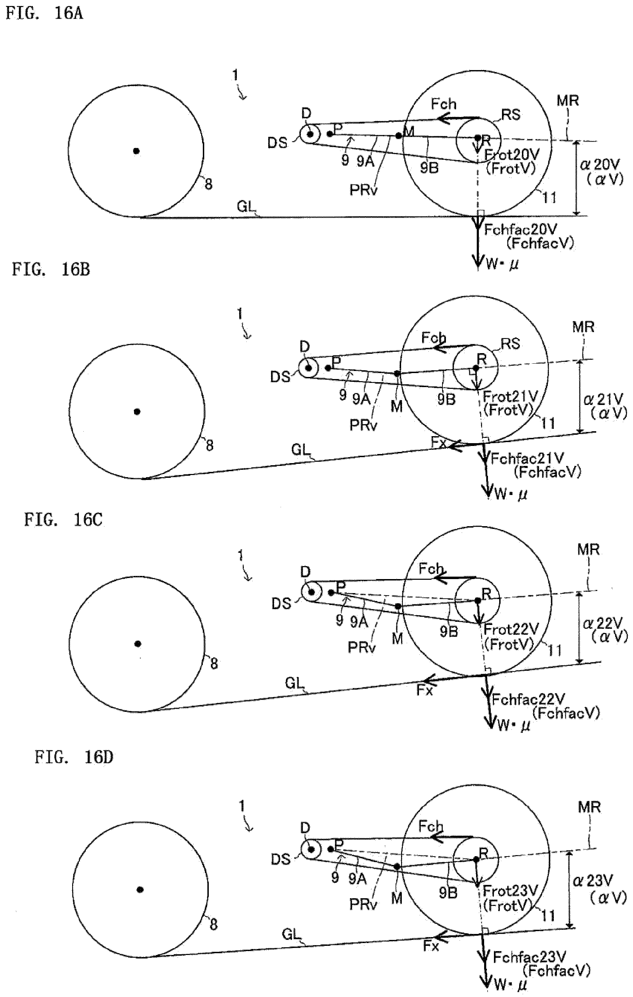

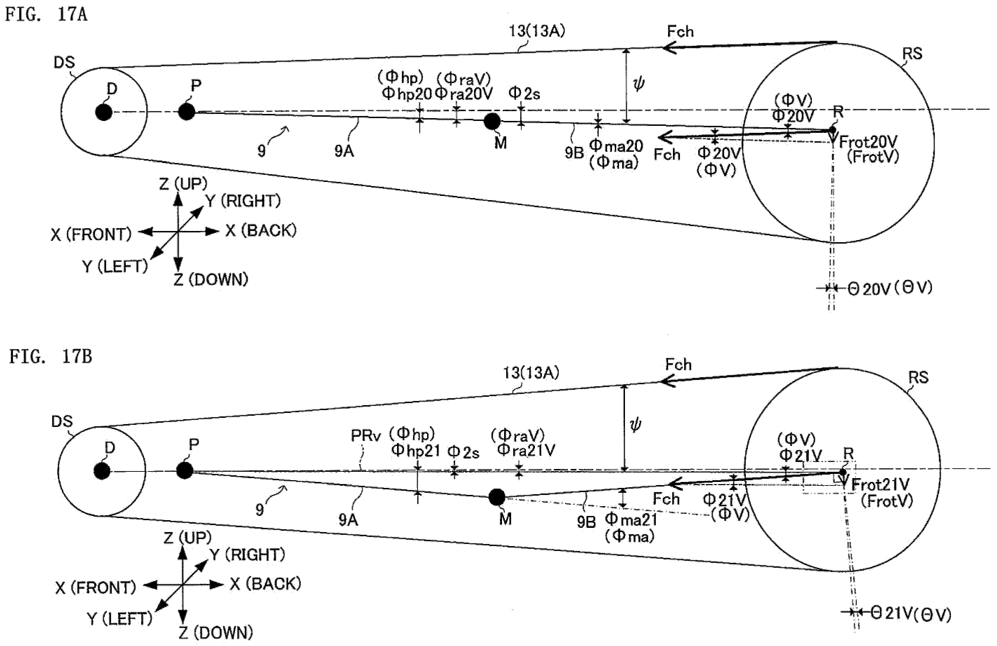

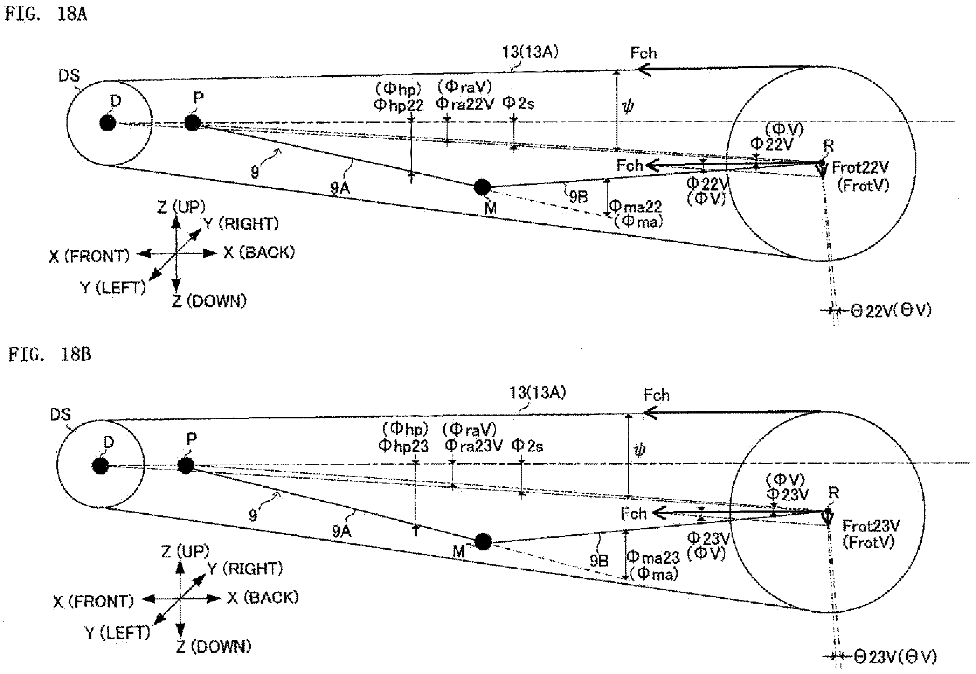

FIGS. 16A to 16D are diagrams for explaining the operational example (2) of the rear arm 9 of the present teaching. FIG. 17A is an enlarged view of the rear arm 9 shown in FIG. 16A. FIG. 17B is an enlarged view of the rear arm 9 shown in FIG. 16B. FIG. 18A is an enlarged view of the rear arm 9 shown in FIG. 16C. FIG. 18B is an enlarged view of the rear arm 9 shown in FIG. 16D.

In the operational example (2), the actuator 25 is controlled such that a component force-to-ground perpendicular angle $\Theta V$ is maintained constant or substantially constant when the first arm 9A rotates around the pivot shaft P. The bending angle $\Phi ma$ is controlled so that the component force-to-ground perpendicular angle $\Theta V$ is maintained constant or substantially constant.

The component force-to-ground perpendicular angle $\Theta V$ is equal to the angle to ground $\alpha V$. That is, in the operational example (2), the actuator 25 is controlled such that the angle to ground $\alpha V$ is maintained constant or substantially constant when the first arm 9A rotates around the pivot shaft P.

The operational example (2) may also be configured as follows. That is, in the operational example (2), the actuator 25 is controlled such that the main arm axis MR and the road surface GL are maintained parallel or substantially parallel to each other when the first arm 9A rotates around the pivot shaft P. The main arm axis MR and the road surface GL being parallel or substantially parallel means that the angle to ground $\alpha V$, i.e., the component force-to-ground perpendicular angle $\Theta V$ is 0 degree or substantially 0 degree.

In FIGS. 17A to 18B, the rear arm angle $\Phi raV$ is to be described by taking rear arm angles $\Phi ra20V$, $\Phi ra21V$, $\Phi ra22V$, and $\Phi ra23V$ as examples in accordance with four amounts of the rear suspension 15 of 32 mm, 16 mm, 8 mm, and 4 mm. A change from $\Phi ra20V$ to $\Phi ra21V$, a change from $\Phi ra21V$ to $\Phi ra22V$, and a change from $\Phi ra22V$ to $\Phi ra23V$ indicate a state where the straddled vehicle 1 accelerates. A change from $\Phi ra23V$ to $\Phi ra22V$, a change from $\Phi ra22V$ to $\Phi ra21V$, and a change from $\Phi ra21V$ to $\Phi ra20V$ indicate a state where the straddled vehicle 1 decelerates.

Further, the first arm angle $\Phi hp$ is to be described by taking $\Phi hp20$, $\Phi hp21$, $\Phi hp22$, $\Phi hp23$ as examples in accordance with the four stroke amounts of the rear suspension 15 described above. A change from $\Phi hp20$ to $\Phi hp21$, a change from $\Phi hp21$ to $\Phi hp22$, and a change from $\Phi hp22$ to $\Phi hp23$ indicate a state where the straddled vehicle 1 accelerates. A change from $\Phi hp23$ to $\Phi hp22$, a change from $\Phi hp22$ to $\Phi hp21$, and a change from $\Phi hp21$ to $\Phi hp20$ indicate a state where the straddled vehicle 1 decelerates.

Moreover, the bending angle $\Phi ma$ is to be described by taking $\Phi ma20$, $\Phi ma21$, $\Phi ma22$, and $\Phi ma23$ as examples in accordance with the four stroke amounts of the rear suspension 15 described above. A change from $\Phi ma20$ to $\Phi ma21$, a change from $\Phi ma21$ to $\Phi ma22$, and a change from $\Phi ma22$ to $\Phi ma23$ indicate a state where the straddled vehicle 1 accelerates. A change from $\Phi ma23$ to $\Phi ma22$, a change from $\Phi ma22$ to $\Phi ma21$, and a change from $\Phi ma21$ to $\Phi ma20$ indicate a state where the straddled vehicle 1 decelerates.

The rotational directional component force angle $\Phi V$ is to be described by taking $\Phi 20V$, $\Phi 21V$, $\Phi 22V$, and $\Phi 23V$ as examples in accordance with the four stroke amounts of the rear suspension 15 described above. A change from $\Phi 20V$ to $\Phi 21V$, a change from $\Phi 21V$ to $\Phi 22V$, and a change from $\Phi 22V$ to $\Phi 23V$ indicate a state where the straddled vehicle 1 accelerates. A change from $\Phi 23V$ to $\Phi 22V$, a change from $\Phi 22V$ to $\Phi 21V$, and a change from $\Phi 21V$ to $\Phi 20V$ indicate a state where the straddled vehicle 1 decelerates.

Moreover, the rotational directional component force FrotV is to be described by taking Frot20V, Frot21V, Frot22V, and Frot23V as examples in accordance with the four stroke amounts of the rear suspension 15 described above. A change from Frot20V to Frot21V, a change from Frot21V to Frot22V, and a change from Frot22V to Frot23V indicate a state where the straddled vehicle 1 accelerates. A change from Frot23V to Frot22V, a change from Frot22V to Frot21V, and a change from Frot21V to Frot20V indicate a state where the straddled vehicle 1 decelerates.

Moreover, the component force-to-ground perpendicular angle $\Theta V$ is to be described by taking $\Theta 20V$, $\Theta 21V$, $\Theta 22V$, $\Theta 23V$ as examples in accordance with the four stroke amounts of the rear suspension 15 described above. In the operational example (2), $\Theta 20V$, $\Theta 21V$, $\Theta 22V$, and $\Theta 23V$ are constant or substantially constant.

The chain force factor FchfacV is to be described by taking Fchfac20V, Fchfac21V, Fchfac22V, and Fchfac23V as examples in accordance with the four rear stroke amounts described above. A change from Fchfac20V to Fchfac21V, a change from Fchfac21V to Fchfac22V, and a change from Fchfac22V to Fchfac23V indicate a state where the straddled vehicle 1 accelerates. A change from Fchfac23V to Fchfac22V, a change from Fchfac22V to Fchfac21V, and a change from Fchfac21V to Fchfac20V indicate a state where the straddled vehicle 1 decelerates.

The following describes in detail the operational example (2).

FIGS. 16A and 17A each show a state where the pivot shaft P, the rotary shaft M, and the rear axle R are aligned on a straight line. The rotary shaft M is located slightly below the drive pivot axis DP. The rear arm axis PRv is inclined slightly downward from the drive pivot axis DP.

In FIGS. 16A and 17A, the stroke amount of the rear suspension 15 (not shown) is, for example, 32 mm. At this time, as shown in FIG. 17A, the rear arm angle $\Phi raV$ corresponds to the rear arm angle $\Phi ra20V$. The bending angle $\Phi ma$ corresponds to the bending angle $\Phi ma20$. The rotational directional component force angle $\Phi V$ corresponds to the rotational directional component force angle $\Phi 20V$. The rotational directional component force FrotV corresponds to the rotational directional component force Frot20V. The component force-to-ground perpendicular angle $\Theta$V correspond to the component force-to-ground perpendicular angle $\Theta$20V. The chain force factor FchfacV shown in FIG. 16A corresponds to the chain force factor Fchfac20V.

As shown in FIG. 12C, the rear arm angle $\Phi$ra20V is, for example, 1.6 degrees. The bending angle $\Phi$ma20 is 0 degree. The rotational directional component force angle $\Phi$20V is, for example, 4.9 degrees. The rotational directional component force Frot20V is, for example, approximately 780 N. The component force-to-ground perpendicular angle $\Theta$20V is, for example, approximately 1.6 degrees. The chain force factor Fchfac20V is approximately 779.7 N when the rotational directional component force Frot20V is multiplied by $\cos\Theta$20V from Equation (6) described above.

Reference is next made to FIGS. 16B and 17B. FIGS. 16B and 17B each show a rear arm 9 from those of FIGS. 16A and 17A, respectively, for example.

In FIGS. 16B and 17B, the rotary shaft M is positioned slightly lower than the rear arm axis PRv, as compared with FIGS. 16A and 17A.

In FIGS. 16B and 17B, the stroke amount of the rear suspension 15 (not shown) is, for example, 28 mm. At this time, as shown in FIG. 17B, the rear arm angle $\Phi$raV corresponds to the rear arm angle $\Phi$ra21V. The bending angle $\Phi$ma corresponds to the bending angle $\Phi$ma21. The rotational directional component force angle $\Phi$V corresponds to the rotational directional component force angle $\Phi$21V. The rotational directional component force FrotV corresponds to the rotational directional component force Frot21V. The component force-to-ground perpendicular angle $\Theta$V correspond to the component force-to-ground perpendicular angle $\Theta$21V. The chain force factor FchfacV shown in FIG. 16B corresponds to the chain force factor Fchfac21V.

As shown in FIG. 12C, the rear arm angle $\Phi$ra21V is, for example, 4.8 degrees. The bending angle $\Phi$ma21 is 8.8 degrees. The rotational directional component force angle $\Phi$21V is, for example, 5.0 degrees. The rotational directional component force Frot21V is, for example, approximately 810 N. The component force-to-ground perpendicular angle $\Theta$21V is, for example, approximately 1.5 degrees. The chain force factor Fchfac21V is approximately 809.0 N when the rotational directional component force Frot21V is multiplied by $\cos\Theta$21V from Equation (6) described above.

As shown in FIG. 13C, when the stroke amount of the rear suspension 15 changes from 32 mm to 28 mm, the difference $\Phi$ra for the rear arm angle $\Phi$raV is 3.2 degrees. For the bending angle $\Phi$ma, the difference $\Phi$ma is 8.8 degrees. For the rotational directional component force angle $\Phi$V, the difference $\Phi$V is 0.1 degrees. For the rotational directional component force FrotV, the difference FrotV is 30 N. For the rotational directional component force angle $\Phi$V, the difference $\Phi$V is -0.1 degrees. For the chain force factor FchfacV, the difference FchfacV is 29.3 N.

Reference is next made to FIGS. 16C and 18A. FIGS. 16C and 18A each show a rear arm 9 modified from those of FIGS. 16B and 17B, respectively, for example.

In FIGS. 16C and 18A, the rotary shaft M is positioned slightly lower than the rear arm axis PRv, as compared with FIGS. 16B and 17B.

In FIGS. 16C and 18A, the stroke amount of the rear suspension 15 (not shown) is, for example, 16 mm. At this time, as shown in FIG. 18A, the rear arm angle $\Phi$raV corresponds to the rear arm angle $\Phi$ra22V. The bending angle $\Phi$ma corresponds to the bending angle $\Phi$ma22. The rotational directional component force angle $\Phi$V corresponds to the rotational directional component force angle $\Phi$22V. The rotational directional component force FrotV corresponds to the rotational directional component force Frot22V. The component force-to-ground perpendicular angle $\Theta$V corresponds to the component force-to-ground perpendicular angle $\Theta$22V. The chain force factor FchfacV corresponds to the chain force factor Fchfac22V shown in FIG. 16C.

As shown in FIG. 12C, the rear arm angle $\Phi$ra22V is, for example, 12.4 degrees. The bending angle $\Phi$ma22 is 16.8 degrees. The rotational directional component force angle $\Phi$22V is, for example, 5.5 degrees. The rotational directional component force Frot22V is, for example, approximately 875 N. The component force-to-ground perpendicular angle $\Theta$22V is, for example, approximately 1.6 degrees. The chain force factor Fchfac22V is approximately 874.7 N when the rotational directional component force Frot22V is multiplied by $\cos\Theta$22V from Equation (6) described above.

As shown in FIG. 13C, when the stroke amount of the rear suspension 15 changes from 28 mm to 16 mm, the difference $\Phi$ra of the rear arm angle $\Phi$raV is 7.6 degrees. For the bending angle $\Phi$ma, the difference $\Phi$ma is 8.0 degrees. For the rotational directional component force angle $\Phi$V, the difference $\Phi$V is 0.5 degrees. For the rotational directional component force FrotV, the difference FrotV is 65 N. For the rotational directional component force angle $\Phi$V, the difference $\Phi$V is 0.1 degrees. For the chain force factor FchfacV, the difference FchfacV is 65.7 N.

Reference is next made to FIGS. 16D and 18B. FIGS. 16D and 18B each show a rear arm 9 f modified rom those of FIGS. 16C and 18A, respectively, for example.

In FIGS. 16D and 18B, the rotary shaft M is positioned slightly lower than the rear arm axis PRv, as compared with FIGS. 16C and 18A.

In FIGS. 16D and 18B, the stroke amount of the rear suspension 15 (not shown) is, for example, 4 mm. At this time, as shown in FIG. 18B, the rear arm angle $\Phi$raV corresponds to the rear arm angle $\Phi$ra23V. The bending angle $\Phi$ma corresponds to the bending angle $\Phi$ma23. The rotational directional component force angle $\Phi$V corresponds to the rotational directional component force angle $\Phi$23V. The rotational directional component force FrotV corresponds to the rotational directional component force Frot23V. The component force-to-ground perpendicular angle ΘV correspond to the component force-to-ground perpendicular angle Θ23V. The chain force factor FchfacV shown in FIG. 16D corresponds to the chain force factor Fchfac23V.

As shown in FIG. 12C, the rear arm angle Φra23V is, for example, 14.5 degrees. The bending angle Φma22 is 18.9 degrees. The rotational directional component force angle Φ23V is, for example, 5.8 degrees. The rotational directional component force Frot23V is, for example, approximately 925 N. The component force-to-ground perpendicular angle Θ23V is, for example, approximately 1.4 degrees. The chain force factor Fchfac23V is approximately 924.7 N when the rotational directional component force Frot23V is multiplied by cosΘ23V from Equation (6) described above.

As shown in FIG. 13C, when the stroke amount of the rear suspension 15 changes from 16 mm to 4 mm, the difference Φra of the rear arm angle ΦraV is 2.1 degrees. For the bending angle Φma, the difference Φma is 2.1 degrees. For the rotational directional component force angle ΦV, the difference ΦV is 0.3 degrees. For the rotational directional component force FrotV, the difference FrotV is 50 N. For the rotational directional component force angle ΦV, the difference ΦV is -0.2 degrees. For the chain force factor FchfacV, the difference FchfacV is 50.0 N.

As above, in the operational example (2), the component force-to-ground perpendicular angle ΘV, i.e., the angle to ground αV is made constant or substantially constant by the control of the actuator 25. The rotational directional component force angle ΦV changes in accordance with the stroke amount of the rear suspension 15. However, the rotational directional component force angle ΦV is larger than the rotational directional component force angle Φ in the conventional example. Accordingly, the rotational directional component force FrotV is larger than the rotational directional component force Frot in the conventional example. Further, since the component force-to-ground perpendicular angle ΘV is constant or substantially constant, the chain force factor FchfacV is less likely to decrease with respect to the rotational directional component force FrotV. The chain force factor FchfacV changes in accordance with the stroke amount of the rear suspension 15. However, since chain force factor FchfacV is less likely to decrease with respect to the rotational directional component force FrotV, a suitable gripping force of the rear wheel 11 can be generated. As a result, the straddled vehicle 1 can adjust the gripping force of the rear wheel 11.

When the component force-to-ground perpendicular angle ΦV, i.e., the angle to ground αV becomes 0 degree by the control of the actuator 25, the straddled vehicle 1 can further increase the gripping force of the rear wheel 11.

9. Effect of Embodiment

According to the present embodiment as described above, the straddled vehicle 1 includes the vehicle body frame 2, the pivot shaft P, and the rear arm 9. The pivot shaft P is supported by the vehicle body frame 2. The rear arm 9 is connected to the vehicle body frame 2 via the pivot shaft P. The rear arm 9 rotates around the pivot shaft P relative to the vehicle body frame 2. The rear arm 9 supports the rear wheel 11 via the rear axle R. The rear arm 9 includes at least the first arm 9A, the rotary shaft M, and the main arm 9B. The first arm 9A is connected to the vehicle body frame 2. The first arm 9A rotates around the pivot shaft P relative to the vehicle body frame 2. The rotary shaft M is provided at a rear end portion of the first arm 9A. The main arm 9B is connected to the first arm 9A via the rotary shaft M. The main arm 9B rotates around the rotary shaft M relative to the first arm 9A. The main arm 9B supports the rear wheel 11 via the rear axle R.

That is, the rear arm 9 is bendable around the rotary shaft M. The straddled vehicle 1 includes the actuator 25 and the power control unit 27. The actuator 25 generates power to rotate the main arm 9B around the rotary shaft M relative to the first arm 9A. The power control unit 27 controls the actuator 25. Thereby, a bending angle Φma of the rear arm 9 is controlled. By controlling the bending angle Φma, the chain force factor Fchfac is controlled. In other words, a rear wheel vertical load W is controlled. Therefore, the straddled vehicle 1 can adjust a gripping force of the rear wheel 11.

According to the present embodiment, the actuator 25 is controlled such that the main arm 9B rotates, for example, counterclockwise around the rotary shaft M when the first arm 9A rotates, for example, clockwise around the pivot shaft P. In other words, the power control unit 27 is configured to determine rotation of the first arm 9A and when determined that the first arm 9A rotates, for example, clockwise around the pivot shaft P the power control unit 27 is configured to control the actuator 25 so that the main arm 9B rotates, for example, counterclockwise around the rotary shaft M. Thus, the range of change in the rotational directional component force FrotV is smaller than the range of change in the conventional rotational directional component force Frot. The range of change in the chain force factor FchfacV is also smaller than the range of change in the conventional chain force factor Fchfac. Therefore, when the first arm 9A rotates around the pivot shaft P, the rear wheel vertical load W is less likely to be affected by the changes in the rotational directional component force FrotV and the chain force factor FchfacV. This can make a small range of change in the gripping force of the rear wheel 11.

According to the present embodiment, especially according to the operational example (2), when the first arm 9A rotates around the pivot shaft P in accordance with the throttle operation, the main arm 9B is rotated so that the main arm axis MR is maintained at the substantially constant angle to ground αV with respect to the road surface GL. In other words, the power control device 27 is configured to determine the angle to ground αV and when determined that the first arm 9A rotates around the pivot shaft P configured to control the actuator 25 so that an angle to ground αV is kept substantially constant in side view of the straddled vehicle 1. However, when the angle to ground $\alpha V$ increases, the range of change in the component force-to-ground perpendicular angle $\Theta V$ is small. Accordingly, decrease in chain force factor FchfacV is small. Therefore, for example, when the rotational directional component force FrotV of the main arm 9B increases as the bending angle $\Phi ra$ of the first arm 9A increases, the chain force factor FchfacV and the rear wheel vertical load W can be adjusted to be increased. As a result, the gripping force of the rear wheel 11 can be adjusted during the throttle operation.

According to the present embodiment, especially according to the operational example (2), when the first arm 9A rotates around the pivot shaft P in accordance with the throttle operation, the main arm 9B is rotated so that the main arm axis MR is maintained substantially parallel to the road surface GL. In other words, when determined that the first arm 9A rotates around the pivot shaft P the power control unit 27 is configured to control the actuator 25 so that the main arm axis MR is kept substantially parallel to the road surface GL in side view of the straddled vehicle 1. Therefore, the range of change in component force-to-ground perpendicular angle $\Theta V$ is small, and the range of decrease in the chain force factor FchfacV is small. Further, the chain force factor FchfacV, i.e., the force that pushes the rear wheel 11 against the road surface GL during the throttle operation, is substantially same as the rotational directional component force Frot and is continuously directed substantially vertical. This allows the rear arm 9 in the present teaching to adjust the gripping force of the rear wheel during the throttle operation.

According to the present embodiment, especially according to the operational example (1), the power control unit 27 controls the actuator 25 such that the rotational directional component force angle $\Phi V$ is maintained constant when the first arm 9A rotates around the pivot shaft P. Therefore, when the first arm 9A rotates around the pivot shaft P, the rotational directional component force FrotV is less likely to change. As a result, the range of change in the chain force factor FchfacV can be reduced. In other words, when determined that the first arm 9A rotates around the pivot shaft P, the power control device 27 is configured to control the actuator 25 so that a chain virtual line-rear arm axis angle $\Phi V$ is kept at a substantially constant magnitude in side view.

In particular, if the chain force Fch is constant, the magnitude of the rotational directional component force FrotV can be controlled to a constant magnitude. As a result, the range of change in the chain force factor FchfacV can be further reduced.

According to the present embodiment, the power transmission mechanism 18 connects the actuator 25 and the main arm 9B. The power transmission mechanism 18 transmits the power of the actuator 25 to the main arm 9B. The power transmission mechanism 18 rotates the main arm 9B around the rotary shaft M relative to the first arm 9A. Accordingly, the power transmission mechanism 18 can transmit the power of the actuator 25 to the main arm 9B efficiently.

According to the present embodiment, the actuator 25 and the power transmission mechanism 18 are connected to the first arm 9A. Accordingly, since the actuator 25 and the power transmission mechanism 18 can be located in the vicinity of the first arm 9A, an installation space can be made more compact.

According to the present embodiment, the straddled vehicle 1 includes the traveling state acquisition unit 29 that acquires information indicating the traveling state of the straddled vehicle 1. The power control unit 27 controls the actuator 25 based on the information indicating the traveling state. Accordingly, the gripping force of the rear wheel 11 can be adjusted depending on the traveling state of the straddled vehicle 1.

According to the present embodiment, the traveling state is a stroke of the rear suspension 15 that supports the rear arm 9 so as to be swingable in the vertical direction with respect to the vehicle body frame 2. The power control unit 27 controls the actuator 25 in accordance with the stroke amount of the rear suspension 15 when the first arm 9A rotates around the pivot shaft P. Variations in the stroke amount of the rear suspension 15 have a significant impact on the rear wheel vertical load W. Therefore, the stroke amount of the rear suspension 15 can be used to control the power of the actuator 25. In other words, the power control unit 27 is configured to control the actuator 25 in accordance with the information pertaining to the stroke of the rear suspension 15 when determined that the first arm 9A rotates around the pivot shaft P.

According to the present embodiment, one of the traveling states is acceleration of the straddled vehicle 1. The power control unit 27 controls the actuator 25 so as to generate power, corresponding to the acceleration, in accordance with the information indicating the acceleration. Thereby, the gripping force of the rear wheel 11 can be adjusted upon acceleration of the straddled vehicle 1.

According to the present embodiment, one of the traveling states is deceleration of the straddled vehicle 1. The power control unit 27 controls the actuator 25 so as to generate power, corresponding to the deceleration, in accordance with the information indicating the deceleration. Thereby, the gripping force of the rear wheel 11 can be adjusted upon deceleration of the straddled vehicle 1.

According to the present embodiment, one of the traveling states is turning of the straddled vehicle 1. The power control unit 27 controls the actuator 25 so as to generate power, corresponding to the turning, in accordance with the information indicating the turning. Thereby, the gripping force of the rear wheel 11 can be adjusted upon turning of the straddled vehicle 1.

10. Modifications

(1) In the present embodiment, the rotational directional component force angle $\Phi V$, the angle to ground $\alpha V$, and the component force-to-ground perpendicular angle $\Theta V$ are maintained constant or substantially constant. The term "substantially constant" includes a case where the rotational directional component force angle $\Phi V$ varies but the range of variation in the rotational directional component force angle $\Phi V$ is smaller than that of the conventional rotational directional component force angle $\Phi$. The term "substantially constant" includes a case where the angle to ground $\alpha V$ and the component force-to-ground perpendicular angle $\Theta V$ vary but the ranges of variation in the angle to ground $\alpha V$ and the component force-to-ground perpendicular angle $\Theta V$ are smaller than that of the conventional angle to ground $\alpha$ and the conventional component force-to-ground perpendicular angle $\Theta$.

In the present embodiment, the main arm axis MR and the road surface GL are parallel or substantially parallel to each other. The term "substantially parallel" includes a case where the main arm axis MR is inclined with respect to the road surface GL, but the inclination is gentle compared to the inclination between the conventional rear arm axis PR and the road surface GL.

(2) In a state where the driver does not sit astride the straddled vehicle 1, the pivot shaft P, the rotary shaft M, and the rear axle R may be arranged on a straight line.

In addition, in the state where the driver does not sit astride the straddled vehicle 1, the rear arm 9 may be bent at the rotary shaft M. The rear arm 9 may be bent at the rotary shaft M when the driver sits astride the straddled vehicle 1.

The pivot shaft P, the rotary shaft M, and the rear axle R being aligned on a straight line means that, for example, the centers of these three aligned in one straight line. The term "arranged in one straight line" is not limited to this, but includes a case where one or two of the three centers are arranged on one straight line and the rest is located near the straight line.

(3) In the present embodiment, the actuator 25 generates power for reciprocating the rod of the hydraulic cylinder. Alternatively, the actuator 25 may be a device, like a motor, that generates rotational power. For example, such a motor is connected to the rotary shaft BR of the base 21.

(4) In the present embodiment, the traveling state acquisition unit 29 includes, for example, the rear stroke sensor 31. Alternatively, the traveling state acquisition unit 29 may include a rear stroke sensor 31 and a vehicle speed sensor. The traveling state acquisition unit 29 may include a rear stroke sensor 31 and an acceleration sensor. In this case, the power control unit 27 determines whether the traveling state is acceleration, deceleration, or turning based on the detected stroke amount and acceleration.

(5) In the present embodiment, the traveling state acquisition unit 29 is the rear stroke sensor 31. Alternatively, the traveling state acquisition unit 29 may be a wheel speed sensor that detects the numbers of rotations of the front wheel 8 and the rear wheel 9. The detected number of rotations of the rear wheel 9 is information indicating whether the straddled vehicle 1 accelerates or decelerates. The traveling state acquisition unit 29 may be a brake sensor that detects an operation amount of the brake lever of the front brake and the rear brake. The detected operation amount of the brake lever is information indicating deceleration of the straddled vehicle 1.

(6) The information indicating the turning may contain a sensor for detecting the inclination of the straddled vehicle 1. When the straddled vehicle 1 is at a predetermined inclination and at a predetermined stroke amount, the power control unit 27 can determine that the straddled vehicle 1 is turning.

(7) In the present embodiment, the power control unit 27 constantly controls the actuator 25 during acceleration, deceleration, and turning. Alternatively, the power control unit 27 may determine whether to control the actuator 25 based on the information indicating the traveling state. The information indicating the traveling state contains a stroke amount of the rear suspension 15, for example. For example, the power control unit 27 determines not to control the actuator 25 when the stroke amount is less than a predetermined value during the acceleration of the straddled vehicle 1. Thereby, when it is determined to control the actuator 25 based on the information indicating the traveling state, the power control unit 27 can control the actuator 25. On the other hand, when it is determined not to control the actuator 25 based on the information indicating the traveling state, the power control unit 27 does not control the actuator 25.

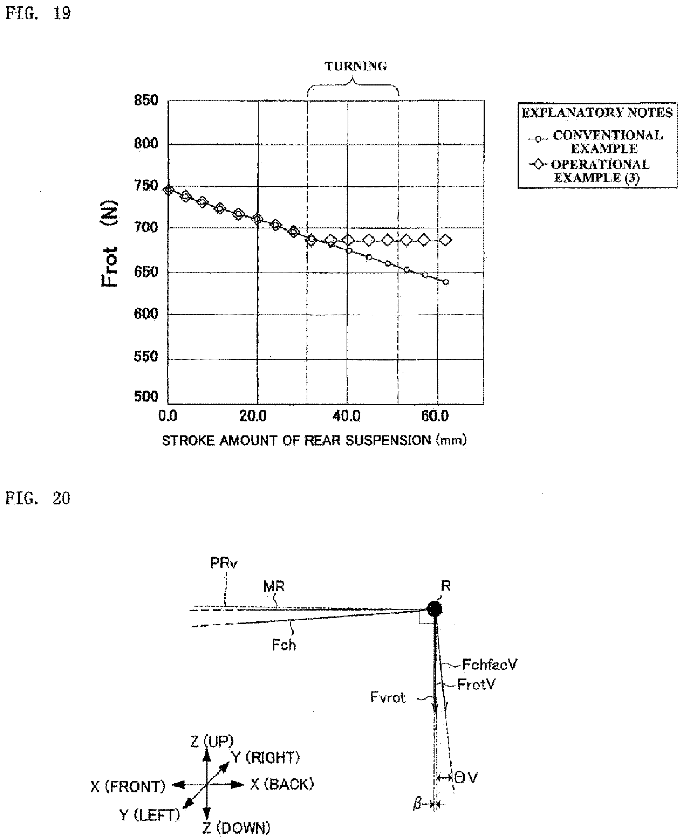

(8) In the present embodiment, the power control unit 27 controls the actuator 25 when the straddled vehicle 1 accelerates, decelerates, and turns. Alternatively, the power control unit 27 may control the actuator 25 only in one state or two states of the acceleration, the deceleration, and the turning. This is to be described below with reference to FIG. 19. In FIG. 19, a modification is referred to as an operational example (3).

FIG. 19 is a graph showing a relationship between the rotational directional component force Frot and the stroke amount of the rear suspension 15 in a case where the actuator is controlled only during turning.

As shown in FIG. 19, when the straddled vehicle 1 is turning, for example, the stroke amount of the rear suspension 15 is in a range of 30.0 mm to 50.0 mm. In addition, it is preferable to recognize the turning by a sensor that detects not only the stroke amount of the rear suspension 15 but also the inclined state of the straddled vehicle 1.

When the straddled vehicle 1 is not turning, the power control unit 27 controls the actuator 25 so that the rear arm 9 is not bent, that is, the bending angle Φma is maintained at 0 degree. That is, the power control unit 27 does not perform the control of changing the bending angle Φma as in the operational examples (1) and (2) while the straddled vehicle 1 is not turning. The power control unit 27 changes the bending angle Φma when the straddled vehicle 1 is turning. The power control unit 27 performs control to change the bending angle Φma as in the operational examples (1) and (2). Thereby, the gripping force of the rear wheel 11 can be adjusted at an appropriate timing only when the straddled vehicle 1 is turning.

(9) In the present embodiment, the rotational directional component force FrotV is obtained from the chain force Fch and the rotational directional component force angle ΦV (sinΦV) by Equation (5) described above. However, a way to determine the rotational directional component force FrotV is not limited to this. This is to be described below with reference to FIG. 20. FIG. 20 is a diagram for explaining a way to determine a rotational directional component force, which differs from that of the embodiment.

The rotational directional component force FrotV acts along a direction perpendicular to the main arm axis MR. In this regard, Fch · sinΦV is a force acting perpendicularly to the rear arm axis PRv. A force acting perpendicularly to the rear arm axis PRv is referred to as a rotational directional component force Fvrot. There is an angular difference β between the rotational directional component force Fvrot and the rotational directional component force FrotV. The rotational directional component force FrotV may be obtained based on the rotational directional component force Fvrot and the angular difference β as in the following equation (5A).

$$FrotV = Fvrot \cdot \cos\beta \quad (5A)$$

However, in the operational examples (1) and (2), the angular difference β is extremely small. Therefore, it can be considered that the angular difference β is substantially zero. That is, cosβ = 1 is assumed. Therefore, the rotational directional component force FrotV obtained by Equation (5A) and the rotational directional component force FrotV obtained by Equation (5) are substantially equal.

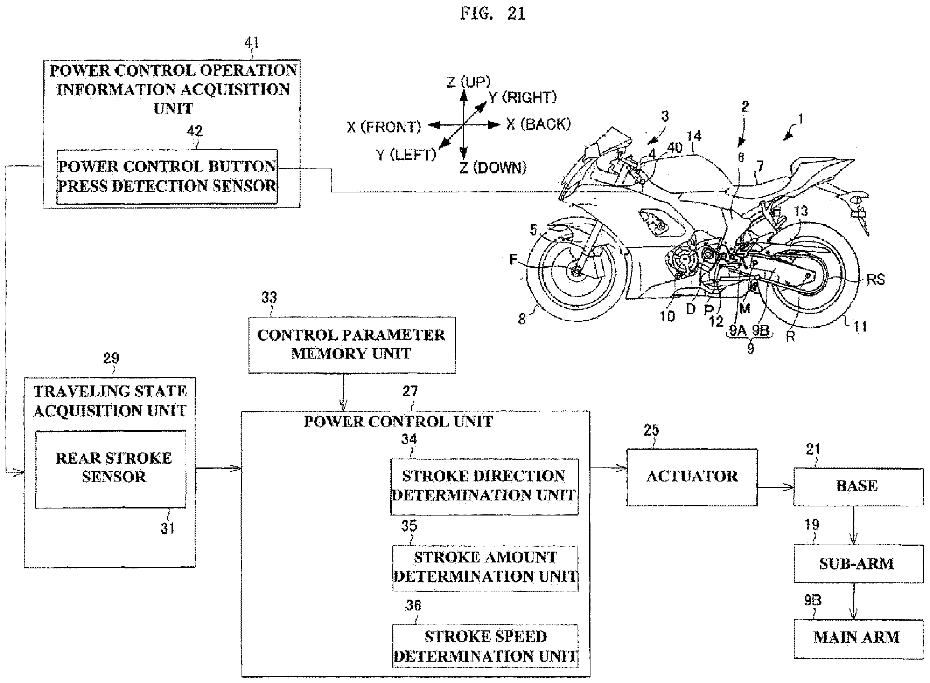

(10) The power control unit 27 may operate the actuator 25 when an instruction is given by the driver. This is to be described below with reference to FIG. 21.

FIG. 21 shows a straddled vehicle 1 according to one modification.

For example, the straddled vehicle 1 includes a power control button 40. The power control button 40 is provided on the handlebar 4, for example. The power control button 40 is operated by the driver to control the actuator 25. The straddled vehicle 1 includes a power control operation information acquisition unit 41. The power control operation information acquisition unit 41 is a power control button press detection sensor 42. The power control unit 27 controls the actuator 25 based on the operation of the power control button 40 by the driver. Specifically, when the driver presses the power control button 40, the power control unit 27 acquires a traveling state of the straddled vehicle 1 and controls the actuator 25 in accordance with the traveling state. Thereby, when the power control button 40 is operated by the driver, a gripping force of the rear wheel can be adjusted. Here, the power control button 40 corresponds to the operating unit of the present teaching.

(11) In the present embodiment, the number of front wheels 8 is one. Alternatively, the number of front wheels 8 may be two. In the present embodiment, the number of rear wheels 11 is one. Alternatively, the number of rear wheels 11 may be two.

(12) In the present embodiment, a sport-type vehicle is exemplified as the straddled vehicle 1. Alternatively, the straddled vehicle 1 may be changed to another type of vehicles such as a street type, a scooter type, an off-road type, or an all-terrain vehicle.

(13) The foregoing embodiment and each of the modifications described in paragraphs (1) to (12) above may be further varied as appropriate by replacing or combining their constructions with the constructions of the other modifications.

Reference Signs List

| | |
|---|---|
| 1: | Straddled vehicle |
| 2: | Vehicle body frame |
| 3: | Steering device |
| 4: | Handlebar |
| 5: | Front suspension |
| 6: | Main frame |
| 7: | Seat |

| | |
|---|---|
| 8: | Front wheel |
| 9: | Rear arm |
| 9A: | First arm |
| 9B: | Main arm (Second arm) |
| 19: | Sub-arm (Power transmission mechanism) |
| 10: | Engine |
| 11: | Rear wheel |
| 12: | Shift pedal |
| 13: | Chain |
| 14: | Fuel tank |
| 15: | Rear suspension |
| 18: | Power transmission mechanism |
| 21: | Base (power transmission mechanism) |
| 23: | Rod (power transmission mechanism) |
| 25: | Actuator |
| 27: | Power control unit (power control device) |
| 29: | Traveling state acquisition unit (acquiring unit) |
| 31: | Rear stroke sensor (acquiring unit) |
| 33: | Control parameter memory unit |
| 34: | Stroke direction determination unit (power control device) |
| 35: | Stroke amount determination unit (power control device) |
| 36: | Stroke speed determination unit (power control device) |
| 101: | Conventional rear arm |
| D: | Drive shaft |
| DS: | Drive sprocket |
| F: | Front axle |
| P: | Pivot shaft |
| R: | Rear axle |
| RS: | Rear sprocket |
| M: | Rotary shaft |
| BR: | Rotary shaft (power transmission mechanism) |
| SC: | Rotary shaft (power transmission mechanism) |
| SR: | Rotary shaft (power transmission mechanism) |
| DP: | Drive pivot axis |
| DR: | Drive rear axis |
| Fchfac: | (conventional) Chain force factor |
| FchfacV: | Chain force factor |
| Fch: | Chain force |
| Frot: | (conventional) Rotational directional component force |
| FrotV: | Rotational directional component force |
| Fx: | Driving force |
| PR: | (conventional) Rear arm axis |
| PRv: | Rear arm axis |
| PM: | First arm axis |
| MR: | Main arm axis (second arm axis) |
| W: | Rear wheel vertical load |
| Wrear: | Weight factor |
| W·μ: | Static friction force |
| GL: | road surface |
| α: | (conventional) Angle to ground |
| αV: | Angle to ground |
| Θ: | (conventional) Component force-to-ground perpendicular angle |
| ΘV: | Component force-to-ground perpendicular angle |
| Φ: | (conventional) Rotational directional component force angle |
| ΦV | Rotational directional component force angle |
| Φhp: | First arm angle |
| Φra: | (conventional) Rear arm angle |
| ΦraV: | Rear arm angle |

Φma:        Bending angle

**Claims**

1. A straddled vehicle (1), comprising:

   a rear arm (9) connected to a vehicle body frame (2) via a pivot shaft (P) supported by the vehicle body frame (2), and configured to rotate around the pivot shaft (P) relative to the vehicle body frame (2) and support a rear wheel (11) via a rear axle (R),
   the rear arm (9) comprising at least:

   a first arm (9A) connected to the vehicle body frame (2) and configured to rotate around the pivot shaft (P) relative to the vehicle body frame (2);
   a rotary shaft (M) provided at a rear end portion of the first arm (9A); and
   a second arm (9B) connected to the first arm (9A) via the rotary shaft (M), and configured to rotate around the rotary shaft (M) relative to the first arm (9A) and support the rear wheel (11) via the rear axle (R),
   the straddled vehicle (1) further comprising:

   an actuator (25) configured to generate power to rotate the second arm (9B) around the rotary shaft (M) relative to the first arm (9A); and
   a power control device (27) configured to control the actuator (25).

2. The straddled vehicle (1) according to claim 1, wherein the power control device (27) is configured to determine rotation of the first arm (9A) and when determined that the first arm (9A) rotates in a first direction around the pivot shaft (P) the power control device (27) is configured to control the actuator (25) so that the second arm (9B) rotates in a second direction, opposite to the first direction, around the rotary shaft (M).

3. The straddled vehicle (1) according to claim 2, wherein an angle to ground ($\alpha$V) is defined as an angle formed between a road surface (GL) on which the straddled vehicle (1) drives and a second arm axis (MR) connecting the rotary shaft (M) and the rear axle (R), the power control device (27) is configured to determine the angle to ground ($\alpha$V) and when determined that the first arm (9A) rotates in a first direction around the pivot shaft (P) the power control device (27) is configured to control the actuator (25) so that an angle to ground ($\alpha$V) is kept substantially constant in side view of the straddled vehicle (1).

4. The straddled vehicle (1) according to claim 3, wherein when determined that the first arm (9A) rotates around the pivot shaft (P) the power control device (27) is configured to control the actuator (25) so that the second arm axis (MR) is kept substantially parallel to the road surface (GL) in side view of the straddled vehicle (1).

5. The straddled vehicle (1) according to claim 2, further comprising a chain (13) configured to transmit power to the rear wheel (11) and a chain virtual line-rear arm axis angle ($\Phi$V) is defined as an angle between a chain virtual line (L) and a rear arm axis (PR), the chain virtual line (L) being a virtual line passing through the rear axle (R) and parallel to an upper portion (13A) of the chain (13), and the rear arm axis (PR) being a virtual line connecting the pivot shaft (P) and the rear axle (R), wherein when determined that the first arm (9A) rotates around the pivot shaft (P), the power control device (27) is configured to control the actuator (25) so that a chain virtual line-rear arm axis angle ($\Phi$V) is kept at a substantially constant magnitude in side view.

6. The straddled vehicle (1) according to any of claims 1 to 5, further comprising:
   a power transmission mechanism (18) configured to connect the actuator (25) and the second arm (9B), transmit power of the actuator (25) to the second arm (9B), and rotate the second arm (9B) around the rotary shaft (M) relative to the first arm (9A).

7. The straddled vehicle (1) according to claim 6, wherein the actuator (25) is connected to the first arm (9A).

8. The straddled vehicle (1) according to claim 6, wherein the actuator (25) and the power transmission mechanism (18) are connected to the first arm (9A).

9. The straddled vehicle (1) according to any of claims 1 to 8, further comprising:

an acquiring unit (29) configured to acquire information, indicating a traveling state of the straddled vehicle (1), wherein

the power control device (27) is configured to control the actuator (25) in accordance with the information indicating the traveling state.

10. The straddled vehicle (1) according to claim 9, further comprising a rear suspension (15) that supports the rear arm (9) so as to swing upward and downward relative to the vehicle body frame (2), wherein the information indicating the traveling state is information pertaining to a stroke of the rear suspension (15), and

the power control device (27) is configured to control the actuator (25) in accordance with the information pertaining to the stroke of the rear suspension (15) when determined that the first arm (9A) rotates around the pivot shaft (P).

11. The straddled vehicle (1) according to claim 9, wherein the information indicating the traveling state is information indicating acceleration of the straddled vehicle (1), and the power control device (27) is configured to control the actuator (25) in accordance with the information indicating the acceleration.

12. The straddled vehicle (1) according to claim 9, wherein the information indicating the traveling state is information indicating deceleration of the straddled vehicle (1), and the power control device (27) is configured to control the actuator (25) in accordance with the information indicating the deceleration.

13. The straddled vehicle (1) according to claim 9, wherein the information indicating the traveling state is information indicating turning of the straddled vehicle (1), and

the power control device (27) is configured to control the actuator (25) in accordance with the information indicating the turning.

14. The straddled vehicle (1) according to claim 9, wherein the power control device (27) is configured to determine whether or not to control the actuator (25) in accordance with the information indicating the traveling state.

15. The straddled vehicle (1) according to any of claims 1 to 14, further comprising:

an operating unit (40) configured to receive driver's operation to control the actuator (25), wherein
the power control device (27) is configured to control the actuator (25) in accordance with the driver's operation of the operating unit (40).

FIG. 1

FIG. 2

Z (UP)
Y (RIGHT)
X (FRONT) — X (BACK)
Y (LEFT)
Z (DOWN)

**CONTROL PARAMETER MEMORY UNIT** 33

**TRAVELING STATE ACQUISITION UNIT** 29

**REAR STROKE SENSOR** 31

**POWER CONTROL UNIT** 27

**STROKE DIRECTION DETERMINATION UNIT** 34

**STROKE AMOUNT DETERMINATION UNIT** 35

**STROKE SPEED DETERMINATION UNIT** 36

**ACTUATOR** 25

**POWER TRANSMISSION MECHANISM** 18

**BASE**

**SUB-ARM** 19

**MAIN ARM** 9B

EP 4 674 743 A1

FIG. 3A

FIG. 3B

FIG. 4

```
┌─────────────────────────────────────────────────────┐
│                       START                         │
└─────────────────────────────────────────────────────┘
                           │
                           ▼
   S1 ┌─────────────────────────────────────────────────┐
      │   ACQUIRE STROKE AMOUNT OF REAR SUSPENSION      │
      └─────────────────────────────────────────────────┘
                           │
                           ▼
   S2 ┌─────────────────────────────────────────────────┐
      │          READ OUT POWER CONTROL TABLE           │
      └─────────────────────────────────────────────────┘
                           │
                           ▼
   S3 ┌─────────────────────────────────────────────────┐
      │   DETERMINATE STROKE DIRECTION, STROKE          │
      │   AMOUNT, AND STROKE SPEED OF ACTUATOR          │
      └─────────────────────────────────────────────────┘
                           │
                           ▼
   S4 ┌─────────────────────────────────────────────────┐
      │   DRIVE ACTUATOR IN DETERMINED STROKE           │
      │   DIRECTION, STROKE AMOUNT, AND  STROKE         │
      │                   SPEED                         │
      └─────────────────────────────────────────────────┘
                           │
                           ▼
      ┌─────────────────────────────────────────────────┐
      │                     END                         │
      └─────────────────────────────────────────────────┘
```

EP 4 674 743 A1

FIG. 5A

FIG. 5B

FIG. 5C

FIG. 5D

FIG. 6

FIG. 7

FIG. 8A

FIG. 8B

FIG. 9A

FIG. 9B

FIG. 9C

FIG. 9D

FIG. 10A

EP 4 674 743 A1

FIG. 10B

FIG. 11A

FIG. 11B

37

EP 4 674 743 A1

FIG. 12A

| OPERATIONAL EXAMPLE (1) DRAWING NUMBER | REAR STROKE AMOUNT | ΦraV | | Φma | | ΦV | | FrotV | | ΘV | | FchfacV | |
|---|---|---|---|---|---|---|---|---|---|---|---|---|---|
| FIG. 5A, FIG. 6 | 32mm | Φra0V | − 0.2° | Φma0 | 0° | Φ0V | 4.3° | Frot0V | 690N | Θ0V | 3.2° | Fchfac0V | 689N |
| FIG. 5B, FIG. 7 | 28mm | Φra1V | 0.8° | Φma1 | 0.2° | Φ1V | 4.3° | Frot1V | 690N | Θ1V | 4.9° | Fchfac1V | 687N |
| FIG. 5C, FIG. 8A | 16mm | Φra2V | 3.0° | Φma2 | 0.4° | Φ2V | 4.3° | Frot2V | 690N | Θ2V | 5.4° | Fchfac2V | 686N |
| FIG. 5D, FIG. 8B | 4mm | Φra3V | 5.0° | Φma3 | 0.8° | Φ3V | 4.3° | Frot3V | 690N | Θ3V | 4.4° | Fchfac3V | 687N |

FIG. 12B

| CONVENTIONAL EXAMPLE DRAWING NUMBER | REAR STROKE AMOUNT | Φra | | Φ | | Frot | | Θ | | Fchfac | |
|---|---|---|---|---|---|---|---|---|---|---|---|
| FIG. 9A, FIG. 10A | 32mm | Φra10 | − 0.2° | Φ10 | 4.3° | Frot10 | 690N | Θ10 | 4.3° | Fchfac10 | 689N |
| FIG. 9B, FIG. 10B | 28mm | Φra11 | 0.8° | Φ11 | 4.4° | Frot11 | 710N | Θ11 | 6.7° | Fchfac11 | 705N |
| FIG. 9C, FIG. 11A | 16mm | Φra12 | 3.5° | Φ12 | 4.7° | Frot12 | 760N | Θ12 | 10.0° | Fchfac12 | 748N |
| FIG. 9D, FIG. 11B | 4mm | Φra13 | 6.0° | Φ13 | 5.1° | Frot13 | 820N | Θ13 | 11.2° | Fchfac13 | 804N |

FIG. 12C

| OPERATIONAL EXAMPLE (2) DRAWING NUMBER | REAR STROKE AMOUNT | ΦraV | | Φma | | ΦV | | FrotV | | ΘV | | FchfacV | |
|---|---|---|---|---|---|---|---|---|---|---|---|---|---|
| FIG. 16A, FIG. 17A | 32mm | Φra20V | 1.6° | Φma20 | 0° | Φ20V | 4.9° | Frot20V | 780N | Θ20V | 1.6° | Fchfac20V | 779.7N |
| FIG. 16B, FIG. 17B | 28mm | Φra21V | 4.8° | Φma21 | 8.8° | Φ21V | 5.0° | Frot21V | 810N | Θ21V | 1.5° | Fchfac21V | 809.0N |
| FIG. 16C, FIG. 18A | 16mm | Φra22V | 12.4° | Φma22 | 16.8° | Φ22V | 5.5° | Frot22V | 875N | Θ22V | 1.6° | Fchfac22V | 874.7N |
| FIG. 16D, FIG. 18B | 4mm | Φra23V | 14.5° | Φma23 | 18.9° | Φ23V | 5.8° | Frot23V | 925N | Θ23V | 1.4° | Fchfac23V | 924.7N |

EP 4 674 743 A1

FIG. 13A

| OPERATIONAL EXAMPLE (1) RANGE OF CHANGE | $\Delta\Phi raV$ | $\Delta\Phi ma$ | $\Delta\Phi V$ | $\Delta FrotV$ | $\Delta\theta V$ | $\Delta FchfacV$ |
|---|---|---|---|---|---|---|
| 32mm − 28mm | 1.0° | 0.2° | 0 | 0 | 1.7° | −2N |
| 28mm − 16mm | 2.2° | 0.2° | 0 | 0 | 0.5° | −1N |
| 16mm − 4mm | 2.0° | 0.4° | 0 | 0 | −1.0° | 1N |

FIG. 13B

| CONVENTIONAL EXAMPLE RANGE OF CHANGE | $\Delta\Phi ra$ | $\Delta\Phi$ | $\Delta Frot$ | $\Delta\theta$ | $\Delta Fchfac$ |
|---|---|---|---|---|---|
| 32mm − 28mm | 1.0° | 0.1° | 20N | 2.4° | 16N |
| 28mm − 16mm | 2.7° | 0.3° | 50N | 3.3° | 43N |
| 16mm − 4mm | 2.5° | 0.4° | 60N | 1.2° | 56N |

FIG. 13C

| OPERATIONAL EXAMPLE (2) RANGE OF CHANGE | $\Delta\Phi raV$ | $\Delta\Phi ma$ | $\Delta\Phi V$ | $\Delta FrotV$ | $\Delta\theta V$ | $\Delta FchfacV$ |
|---|---|---|---|---|---|---|
| 32mm − 28mm | 3.2° | 8.8° | 0.1° | 30N | −0.1° | 29.3N |
| 28mm − 16mm | 7.6° | 8.0° | 0.5° | 65N | 0.1° | 65.7N |
| 16mm − 4mm | 2.1° | 2.1° | 0.3° | 50N | −0.2° | 50.0N |

FIG. 14A

FIG. 14B

FIG. 15A

FIG. 15B

EP 4 674 743 A1

FIG. 16A

FIG. 16B

FIG. 16C

FIG. 16D

FIG. 17A

FIG. 17B

EP 4 674 743 A1

FIG. 18A

FIG. 18B

EP 4 674 743 A1

FIG. 19

TURNING

EXPLANATORY NOTES
—o— CONVENTIONAL
EXAMPLE
—◇— OPERATIONAL
EXAMPLE (3)

STROKE AMOUNT OF REAR SUSPENSION (mm)

FIG. 20

PRv
MR
R
Fch
FchfacV
FrotV
Fvrot
Z (UP)
Y (RIGHT)
X (FRONT)
X (BACK)
Y (LEFT)
Z (DOWN)
ΘV
β

# FIG. 21

POWER CONTROL OPERATION
INFORMATION ACQUISITION
UNIT
41

POWER CONTROL BUTTON
PRESS DETECTION SENSOR
42

Z (UP)

Y (RIGHT)

X (FRONT) — X (BACK)

Y (LEFT)

Z (DOWN)

CONTROL PARAMETER
MEMORY UNIT
33

TRAVELING STATE
ACQUISITION UNIT
29

REAR STROKE
SENSOR
31

POWER CONTROL UNIT
27

STROKE DIRECTION
DETERMINATION UNIT
34

STROKE AMOUNT
DETERMINATION UNIT
35

STROKE SPEED
DETERMINATION UNIT
36

ACTUATOR
25

BASE
21

SUB-ARM
19

MAIN ARM
9B

EP 4 674 743 A1

FIG. 22A

FIG. 22B

FIG. 23A

FIG. 23B

FIG. 23C

Europäisches
Patentamt

European
Patent Office

Office européen
des brevets

# EUROPEAN SEARCH REPORT

**Application Number**

EP 25 18 1323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 433 236 A (LOTUS CAR [GB]) 20 June 2007 (2007-06-20) | 1,2,6-15 | INV. B62K25/28 |
| A | * figures 1,2,11 * | 3-5 | |
| A | IT 2022 0002 5320 A1 (PILI GIORGIO [IT]) 12 June 2024 (2024-06-12) * figures 5,6 * | 1 | |
| A | WO 2020/136578 A1 (PIAGGIO & C SPA [IT]) 2 July 2020 (2020-07-02) * figure 10 * | 1 | |

**TECHNICAL FIELDS SEARCHED (IPC)**

B62K

The present search report has been drawn up for all claims

| Place of search | Date of completion of the search | Examiner |
|---|---|---|
| The Hague | 21 October 2025 | Booij, Nico |

EPO FORM 1503 03.82 (P04C01)

# EP 4 674 743 A1

## ANNEX TO THE EUROPEAN SEARCH REPORT
## ON EUROPEAN PATENT APPLICATION NO.

EP 25 18 1323

21-10-2025

| Patent document cited in search report | | | Publication date | Patent family member(s) | | Publication date |
|---|---|---|---|---|---|---|
| GB 2433236 | A | | 20-06-2007 | NONE | | |
| IT 202200025320 | A1 | | 12-06-2024 | | | |
| WO 2020136578 | A1 | | 02-07-2020 | EP 3902741 A1 | | 03-11-2021 |
| | | | | WO 2020136578 A1 | | 02-07-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001063672 A